(19) **Europäisches Patentamt** / **European Patent Office** / **Office européen des brevets**

(11) **EP 4 686 118 A2**

(12) **EUROPEAN PATENT APPLICATION**
published in accordance with Art. 153(4) EPC

(43) Date of publication:
28.01.2026 Bulletin 2026/05

(21) Application number: 24775193.6

(22) Date of filing: 20.03.2024

(51) International Patent Classification (IPC):
*H04L 1/00* (2006.01)    *H04L 25/02* (2006.01)

(52) Cooperative Patent Classification (CPC):
**H04L 1/00; H04L 25/02**

(86) International application number:
**PCT/KR2024/003486**

(87) International publication number:
**WO 2024/196146 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.03.2023 KR 20230035852

(71) Applicant: LG Electronics Inc.
Yeongdeungpo-gu
Seoul 07336 (KR)

(72) Inventors:
• KIM, Hyungtae
  Seoul 06772 (KR)
• KANG, Jiwon
  Seoul 06772 (KR)
• PARK, Haewook
  Seoul 06772 (KR)

(74) Representative: Plasseraud IP
104 Rue de Richelieu
CS92104
75080 Paris Cedex 02 (FR)

(54) **METHOD AND DEVICE FOR TRANSMITTING/RECEIVING CHANNEL STATE INFORMATION IN WIRELESS COMMUNICATION SYSTEM**

(57) A method and a device for transmitting/receiving channel state information (CSI) in a wireless communication system are disclosed. The method according to an embodiment of the present disclosure may comprise the steps of: receiving CSI-related configuration information from a base station, the configuration information including information associated with a plurality of time instances; receiving a CSI-RS on K (K is an integer greater than 0) CSI-RS resources from the base station; and transmitting CSI to the base station, the CSI including a PMI corresponding to codebook indexes.

FIG.21

Receive configuration information related to CSI — S2101

Receive CSI-RS on K CSI-RS resources — S2102

Transmit CSI — S2103

**Description**

[Technical Field]

The present disclosure relates to a wireless communication system, and in more detail, relates to a method and an apparatus of transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving channel state information for multiple time instances.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving configuration information related to channel state information (CSI) from a base station, wherein the configuration information includes information related to a plurality of time instances; receiving, from the base station, a CSI-reference signal (CSI-RS) on K (K being an integer greater than 0) CSI-RS resources; and transmitting the CSI to the base station, wherein the CSI includes a precoding matrix indicator (PMI) corresponding to codebook indices. The PMI may indicate precoding matrices for each of remaining time instances, excluding one or more time instances, among the plurality of time instances.

A method performed by a base station in a wireless communication system according to an additional aspect of the present disclosure may include: transmitting configuration information related to channel state information (CSI) to a user equipment (UE), wherein the configuration information includes information related to a plurality of time instances; transmitting, to the UE, a CSI-reference signal (CSI-RS) on K (K being an integer greater than 0) CSI-RS resources; and receiving the CSI from the UE, wherein the CSI includes a precoding matrix indicator (PMI) corresponding to codebook indices. The PMI may indicate precoding matrices for each of remaining time instances, excluding one or more time instances, among the plurality of time instances.

[Technical Effects]

According to an embodiment of the present disclosure, accurate channel state can be obtained by reporting channel state information for multiple time instances..

In addition, according to an embodiment of the present disclosure, by excluding channel state information for time instances with relatively low channel prediction accuracy, a more accurate channel state can be obtained and increased processing complexity can be prevented.

In addition, according to an embodiment of the present disclosure, by considering the correlation between the length of basis vectors and the number of basis vectors in a codebook associated with CSI reporting for multiple time instances, information loss due to compression can be minimized.

In addition, according to an embodiment of the present disclosure, by considering the correlation between the number of CSI-RS resources for channel measurement and the length of basis vectors in a codebook associated with CSI reporting for multiple time instances, increased processing complexity can be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a classification of artificial intelligence.
FIG. 8 illustrates a feed-forward neural network.
FIG. 9 illustrates a recurrent neural network.
FIG. 10 illustrates a convolutional neural network.
FIG. 11 illustrates an auto encoder.
FIG. 12 illustrates a functional framework for an AI operation.
FIG. 13 is a diagram illustrating split AI inference.
FIG. 14 illustrates an application of a functional framework in a wireless communication system.
FIG. 15 illustrates an application of a functional framework in a wireless communication system.
FIG. 16 illustrates an application of a functional framework in a wireless communication system.
FIG. 17 illustrates a PMI for multiple time instances not earlier than a CSI reference resource in a wireless communication system to which the present disclosure can be applied.
FIG. 18 illustrates a PMI for multiple time instances not later than a CSI reference resource in a wireless communication system to which the present disclosure can be applied.
FIG. 19 illustrates PMI information indicated by a codebook for a specific codebook parameter in a wireless communication system to which the present disclosure can be applied.
FIG. 20 is a diagram illustrating a signaling procedure between a network and a UE for a method for transmitting and receiving channel state information according to an embodiment of the present disclosure.
FIG. 21 is a diagram illustrating an operation of a UE for a method for transmitting and receiving channel state information according to an embodiment of the present disclosure.
FIG. 22 is a diagram illustrating an operation of a base station for a method for transmitting and receiving channel state information according to an embodiment of the present disclosure.
FIG. 23 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or" , unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

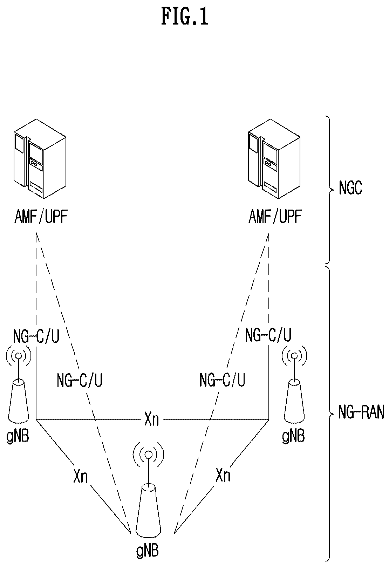

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

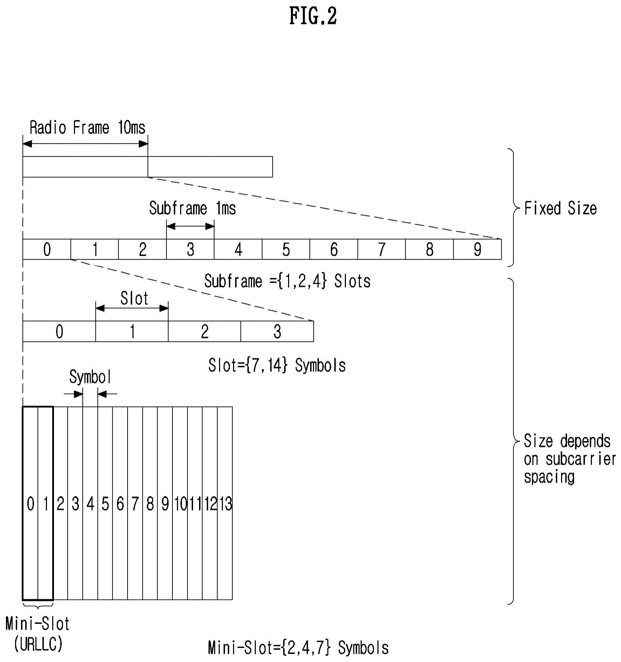

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is 480-103 Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

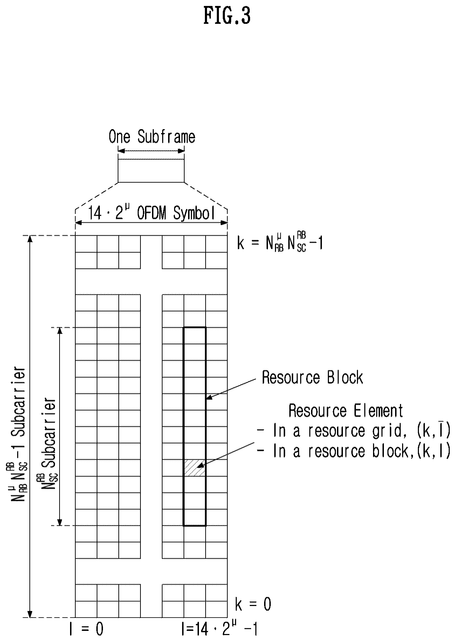

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14.2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequencyposition of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{SC}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

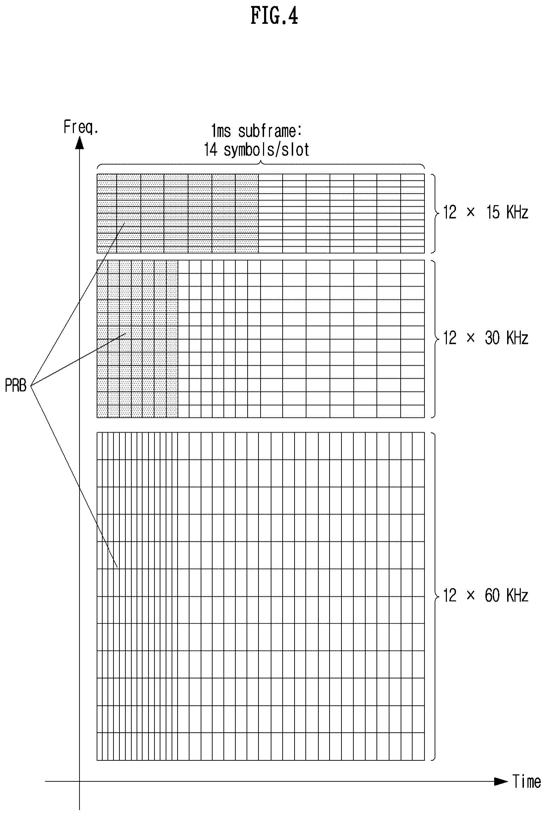

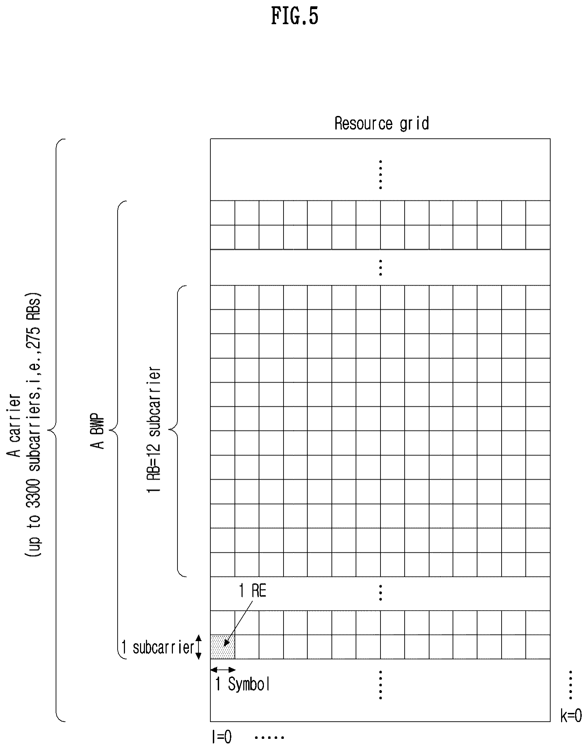

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

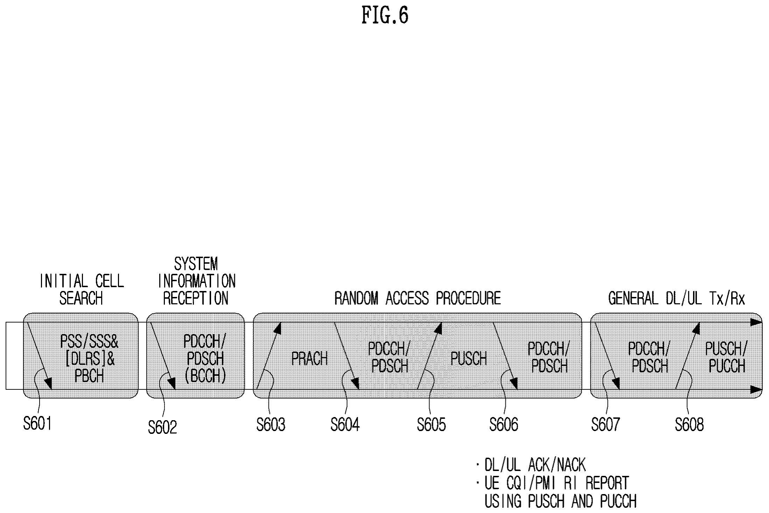

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

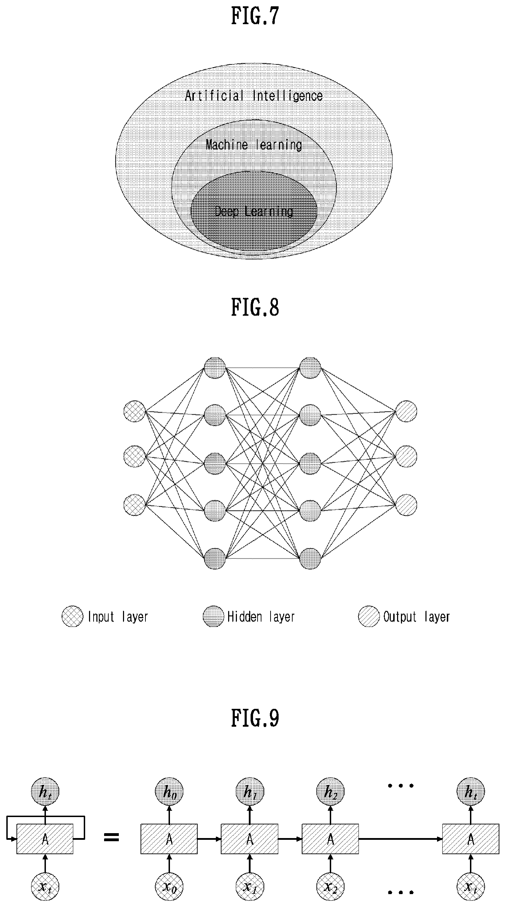

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network

- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, $x_t$ represents an input value, and $h_t$ represents an output value. Here, $h_t$ may refer to a state value representing the current state based on time, and $h_{t-1}$ may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

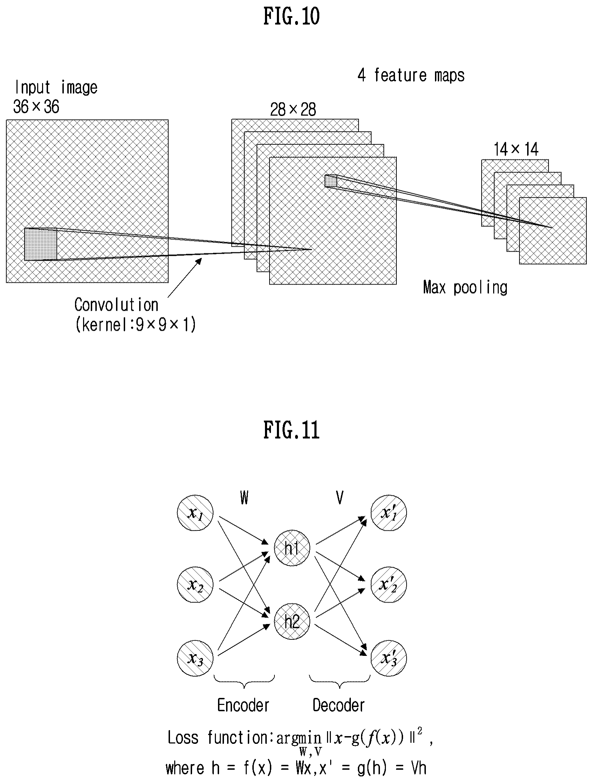

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.

- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

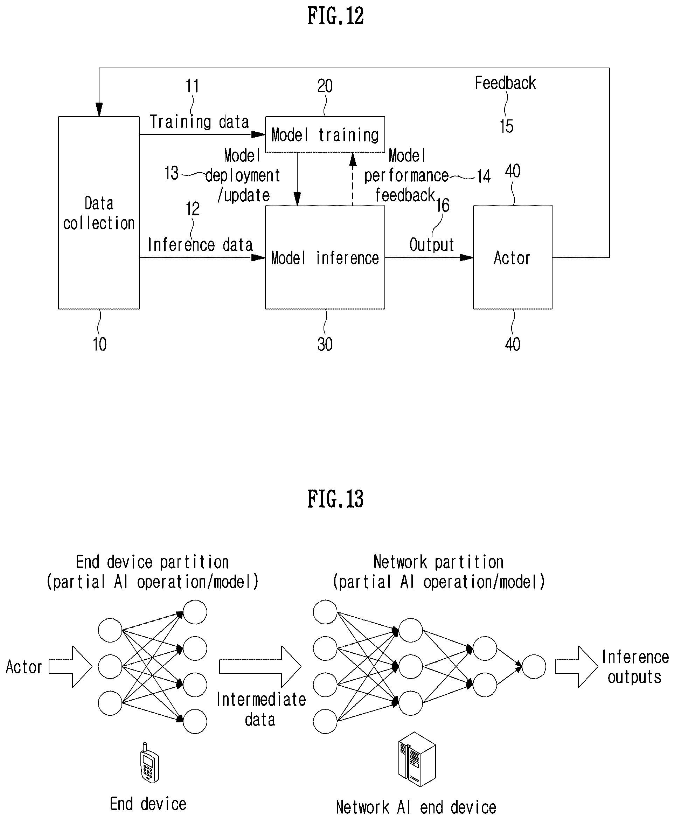

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energyintensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

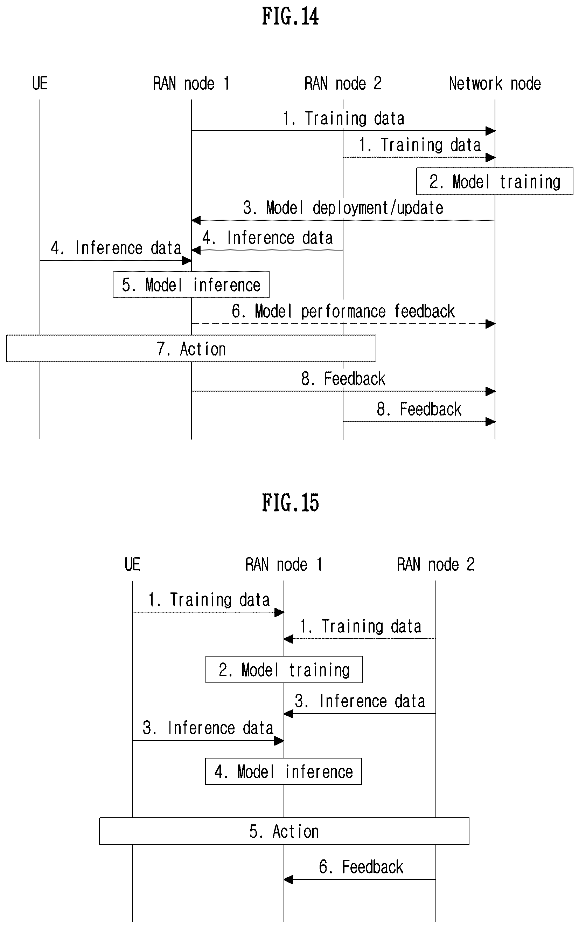

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

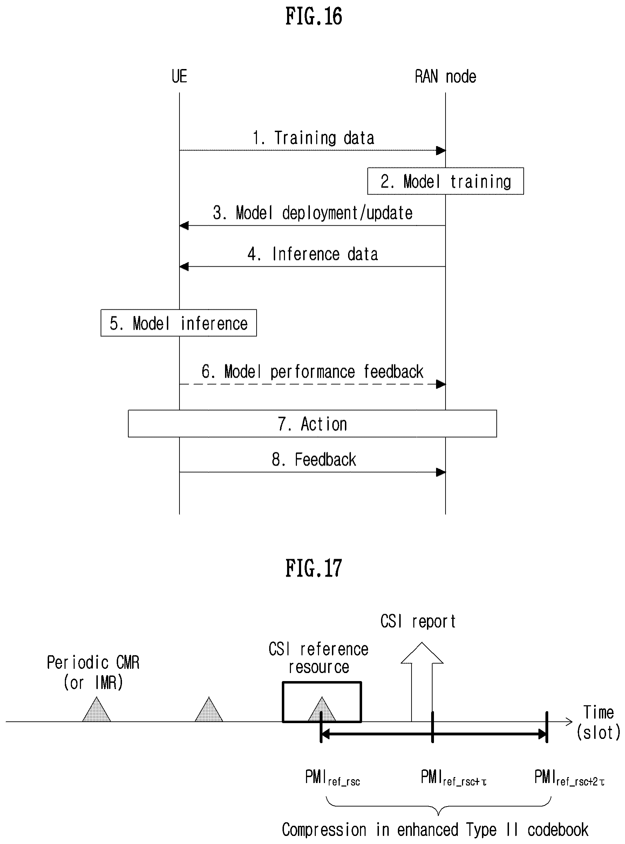

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

CSI(channel state information)-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

1) CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

2) Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

3) Resource Setting Configuration

As described, a resource setting may mean a resource set list.
For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.
One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS - ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesForInterference) is used for interference measurement performed in CSI-IM.

4) CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.
In addition, when interference measurement is performed in an NZP CSI-RS, UE does not expect to be configured with one or more NZP CSI-RS resources in an associated resource set in a resource setting for channel measurement.
A terminal configured with a higher layer parameter nzp-CSI-RS-ResourcesForInterference does not expect that 18 or more NZP CSI-RS ports will be configured in a NZP CSI-RS resource set.
For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

5) CSI Report

For a CSI report, a time and frequency resource which may be used by UE are controlled by a base station.
CSI(channel state information) may include at least one of a channel quality indicator(CQI), a precoding matrix indicator (PMI), a CSI-RS resource indicator (CRI), a SS/PBCH block resource indicator (SSBRI), a layer indicator (LI), a rank indicator (RI) or L1-RSRP.
For CQI, PMI, CRI, SSBRI, LI, RI, L1-RSRP, a terminal is configured by a higher layer with N≥1 CSI-ReportConfig reporting setting, M≥1 CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

<u>Codebook</u>

The codebooks supported by NR are largely divided into two types (e.g., Type 1 CSI and Type 2 CSI). In the case of Type 1 CSI, it can be divided into a single panel codebook (CB) and a multi panel CB. Type 1 CSI CB can be mainly targeted and configured for single user (SU)-MIMO, and the codebook is configured to select/indicate a single or multiple preferred DFT vector(s) from a set of oversampled DFT vectors based on the spatial domain (SD) and to instruct the co-phase for the cross polarization of the base station antenna. For Type 2 CSI, a UE selects multiple DFT vectors based on SD and linearly combines them to form a high-resolution codebook, which is mainly used for the purpose of improving multi-user (MU)-MIMO performance. In order to improve the high payload, which is a shortcoming of Type 2 CSI introduced in Release 15 NR, eType 2 (enhanced Type 2) CSI, which reduces the payload of the codebook by considering the correlation of the frequency axis, was introduced in Release 16 NR.

The Rel-16 (eType II) codebook is configured as follows. W_1 and W_2 are the final precoding matrices corresponding to the Tx antennas of each TRP, and the equation for this is as shown in Equation 3 below.

【Equation 3】

$$W = \frac{1}{\sqrt{\eta}} W_{SD} * \widetilde{W} * W_{FD}^{H}$$

Here, H can mean a Hermitian operation (conjugate transpose), and depending on the frequency domain (FD) basis design, it can be simply replaced by a transpose operation. $\eta$ is a normalization term.

The spatial domain (SD) basis and the frequency domain (FD) basis (basis vector) are composed of DFT-based vectors (basis vectors), and in particular, the SD basis can be determined as 2D DFT or 1D DFT depending on the antenna structure of the TRP. Here, the DFT vector is an example, and other basis vectors can be used. In addition, M is the number of FD basis.

In the Rel-15 Type II codebook, among the oversampled discrete Fourier transform (DFT) vectors, L basis DFT vectors are used per specific pole (polarization). Then, a precoding matrix is configured by applying a wide band (WB) amplitude coefficient and a sub-band (SB) amplitude/phase coefficient to the basis DFT vectors. Among the oversampled DFT vectors, a specific vector is $v_{l,m}$ and is defined in the standard as shown in the following Equation 4.

【Equation 4】

$$u_m = \begin{bmatrix} 1 & e^{j\frac{2\pi m}{O_2 N_2}} & \cdots & e^{j\frac{2\pi m(N_2-1)}{O_2 N_2}} \end{bmatrix} \text{ when } N_2 > 1, \ u_m = 1 \text{ when } N_2 = 1$$

$$v_{l,m} = \begin{bmatrix} 1 & e^{j\frac{2\pi l}{O_1 N_1}} u_m & \cdots & e^{j\frac{2\pi l(N_1-1)}{O_1 N_1}} u_m \end{bmatrix}$$

Here, $N_1$ and $N_2$ represent the number (per polarization) of 1st domain and 2nd domain antennas per TRP, respectively (i.e., the number of antenna ports), which can be configured by the higher layer parameter n1-n2-codebookSubsetRestriction. $O_1$ and $O_2$ represent the oversampling factors of the 1st domain (or 1st dimension) and the 2nd domain (or 2nd dimension), respectively. The supported configurations of $(N_1, N_2)$ and $(O_1, O_2)$ for a given number of CSI-RS ports can be defined in the standard.

L represents the number of beams, and the L value is configured by the higher layer parameter numberOfBeams. Here, when $P_{CSI-RS}=4$, L=2, and when $P_{CSI-RS}>4$, L $\in$ {2, 3,4} can be.

Here, the indices $m_1^{(i)}$ and $m_2^{(i)}$ as in the following Equation 5 are applied to 1 and m in the Equation 4, respectively, and a precoding matrix can be constructed based on this DFT basis vector.

【Equation 5】

$$m_1^{(i)} = O_1 n_1^{(i)} + q_1$$

$$m_2^{(i)} = O_2 n_2^{(i)} + q_2$$

Here, i is 0,1,...,L-1. $n_1^{(i)} \in \{0,1,...,N_1-1\}$, $n_2^{(i)} \in \{0,1,...,N_2-1\}$. $q_1 \in \{0,1,...,O_1-1\}$, $q_2 \in \{0,1,...,O_2-1\}$. The values of $n_1^{(i)}$ and $n_2^{(i)}$ are determined according to the algorithm defined in the standard.

In the Rel-16 Type II codebook, a UE compresses and reports codebook information using frequency domain correlation for the above-described Rel-15 Type II codebook.

Here, the compressed information may be configured based on a set of some vectors of the oversampled DFT codebook to compress the codebook information. Here, the set of some vectors of the oversampled DFT codebook may be referred to as 'frequency domain (FD) basis vectors'.

$M_\upsilon$ FD basis vectors are defined in the standard as shown in the Equation 6 below.

【Equation 6】

$$\begin{bmatrix} y_{0,l}^{(f)}, y_{1,l}^{(f)}, \ldots, y_{N_3-1,l}^{(f)} \end{bmatrix}^T$$

Here, f=0,1,...,$M_\upsilon$-1. $N_3$ is the total number of precoding matrices. l=1,...,$\upsilon$, and $\upsilon$ is the rank indicator (RI) value.

Among the $M_\upsilon$ FD basis vectors above, the t-th element of the f-th vector (where t=0,...,$N_3$-1) is equal to $y_{t,l}^{(f)}$, and is defined in the standard as shown in the following Equation 7.

【Equation 7】

$$y_{t,l}^{(f)} = e^{j\frac{2\pi t n_{3,l}^{(f)}}{N_3}}$$

Here, $n_{3,l}$ are defined in the standard as in Equation 8 below.

$$【\text{Equation 8}】$$

$$n_{3,l} = \left[ n_{3,l}^{(0)}, \ldots, n_{3,l}^{(M_v-1)} \right]$$

$$n_{3,l}^{(f)} \in \{0,1,\ldots,N_3 - 1\}$$

Here, f = 0, 1, ..., $M_v$-1. In the above Equation, through the values of $n_{3,l}^{(f)}$, Mu combinations of FD basis vectors selected by a UE from among the oversampled DFT codebooks of size $N_3$ (i.e., among the total number of precoding matrices) can be reported to a base station.

In addition, in the enhanced Type II codebook, a precoding matrix can be indicated by a PMI that a UE reports to a base station, and the precoding matrix can be determined from L vectors (i.e., the L value represents the number of beams and is configured by the higher layer parameter numberOfBeams) + $M_v$ vectors (i.e., the number of FD basis vectors configured by a base station). Here, the L vectors are $n_1 \in \{0,1,\ldots,N_1-1\}$ (the number of antenna ports in a first dimension) and $n_2 \in \{0,1,\ldots,N_2-1\}$ (the number of antenna ports in a second dimension) indicated by $i_{1,1}$, $i_{1,2}$. $q_1 \in \{0,1,\ldots,O_1-1\}$ (an oversampling value in a first dimension) and $q_2 \in \{0,1,\ldots,O_2-1\}$ (an oversampling value in a second dimension) can be identified by indices.

Here, PMI corresponds to codebook indices $i_1$ and $i_2$. $i_1$ and $i_2$ may each be composed of multiple indices according to the number of ranks ($v$). That is, PMI may include indices included in $i_1$ and $i_2$ (or indicators for indicating the corresponding indices). For example, in an enhanced Type II codebook, when $v$ =1, $i_1$ may include $i_{1,1}$, $i_{1,2}$, $i_{1,5}$, $i_{1,6,1}$, $i_{1,7,1}$, $i_{1,8,1}$. As another example, when $v$=2, $i_2$ may include $i_{2,3,1}$, $i_{2,4,1}$, $i_{2,5,1}$, $i_{2,3,2}$, $i_{2,4,2}$, $i_{2,5,2}$. Here, $i_{2,4,l}$(l=1,2,3,4) correspond to the amplitude coefficient indicator for indicating the amplitude coefficient. Here, $i_{2,5,l}$(l=1,2,3,4) corresponds to the phase coefficient indicator for indicating the phase coefficient.

The enhanced Type II codebook can be largely composed of three parts. That is, the SD basis part, the coefficient matrix part, and the FD basis part.

First, the SD basis (i.e., $\mathbf{W_{SD}}$) will be described. Hereinafter, for the convenience of explanation, it is assumed that two TRPs are associated with each other, but this is only one example and the disclosure is not limited thereto.

$$【\text{Equation 9}】$$

$$W_{SD} = \begin{bmatrix} b_1 & \cdots & b_L & & \mathbf{0} & \\ & \mathbf{0} & & b_1 & \cdots & b_L \end{bmatrix}$$

In the Equation 9, $b_i \in C^{\frac{N_{Tx}}{2} \times 1}$ is the i-th SD basis vector, its size is $N_{Tx}/2$, and can be replaced with $v_{l,m}$ of the Equation 4 above. The size of the linearly combined vector (b1 ... $b_L$) is $N_{Tx}$, where L is the number of basis vectors that are linearly combined. The reason why the Equation 9 is configured in the form of a block diagonalization matrix is because it considers the cross-polarization (X-pol) antenna that a base station (or TRP) is equipped with. In FIG. 9, the same number of basis vectors and the same basis vector are considered for each polarization, and it is a form suitable for the case where a single TRP is considered. However, this is one example, and the present disclosure is not limited thereto. If the above form is configured to be suitable for a multi-TRP form, it can be as shown in the Equation 10 below.

$$【\text{Equation 10}】$$

$$W_{SD} = \begin{bmatrix} b_{1,1} & \cdots & b_{1,L_1} & 0 & \cdots & 0 & 0 & \cdots & 0 & 0 & \cdots & 0 \\ 0 & \cdots & 0 & b_{2,1} & \cdots & b_{2,L_2} & 0 & \cdots & 0 & 0 & \cdots & 0 \\ 0 & \cdots & 0 & 0 & \cdots & 0 & b_{1,1} & \cdots & b_{1,L_1} & 0 & \cdots & 0 \\ 0 & \cdots & 0 & 0 & \cdots & 0 & 0 & \cdots & 0 & b_{2,1} & \cdots & b_{2,L_2} \end{bmatrix}$$

In the Equation 10, is the j-th (j=1,...,$L_i$) SD basis vector ($L_i$ is the number of basis vectors linearly combining for the i-th TRP) corresponding to the i-th (i=1,...,M) TRP (when the number of TRPs is M), its size is $N_{Tx,i}/2$, and can be replaced with $v_{l,m}$ in the Equation 4. As can be seen in the Equation 10, the SD basis can be independently selected for each TRP in terms of basis vector and its number (i.e., $L_i$). For example, $L_i \in \{2,4,6\}$ can be. In addition, although the Equation 10 exemplifies a case where a basis vector is commonly selected for each polarization, the present disclosure is not limited thereto. In the case where the proposal is configured most flexibly, the formula can be transformed as in the following Equation 11.

【Equation 11】

$$W_{SD} = \begin{bmatrix} b_{1,1,1} & \cdots & b_{1,1,L_{1,1}} & 0 & \cdots & 0 & 0 & \cdots & 0 & 0 & \cdots & 0 \\ 0 & \cdots & 0 & b_{2,1,1} & \cdots & b_{2,1,L_{2,1}} & 0 & \cdots & 0 & 0 & \cdots & 0 \\ 0 & \cdots & 0 & 0 & \cdots & 0 & b_{1,2,1} & \cdots & b_{1,2,L_{1,2}} & 0 & \cdots & 0 \\ 0 & \cdots & 0 & 0 & \cdots & 0 & 0 & \cdots & 0 & b_{2,2,1} & \cdots & b_{2,2,L_{2,2}} \end{bmatrix}$$

In Equation 11, $b_{i,p,j} \in C^{\frac{N_{Tx,i}}{2} \times 1}$ is the j-th (j=1,...,$L_{i,p}$) SD basis vector corresponding to the p-th polarization (p=1,2) in the i-th (i=1,...,M) TRP, its size is $N_{Tx,i}$/2, and can be replaced by $v_{l,m}$ in Equation 4. As can be seen in Equation 11, the SD basis can be independently selected in terms of basis vectors and their number (i.e., $L_{i,p}$) for each TRP and each polarization. Alternatively, the oversampling factor and/or type (e.g., DFT, DCT (discrete cosine transform)) of the basis for constructing the SD basis can also be independently set for each TRP.

In addition, in the above Equations 10 and 11, the order of each block is exemplified as the 1st polarization of TRP1 -> 1st polarization of TRP2 -> 2nd polarization of TRP1 -> 2nd polarization of TRP2, however this is only an example, and the order may vary depending on the CSI-RS configuration and antenna port mapping.

Referring again to FIG. 9, the method of constructing the coefficient matrix (i.e., combining matrix $\tilde{W}$) is described.

The dimension size of the combining matrix is 2L-by-M (the number of rows is 2L and the number of columns is M) based on the Equation 9. If the Equation 10 is considered, the dimension size may be $2\sum_{i=1}^{M} L_i$-by-M , and if the Equation 11 is considered, the dimension size may be $\sum_{i=1}^{M} \sum_{p=1}^{2} L_{i,p}$-by-M .

In the case of the above combining matrix, it is composed of complex values and can be divided into an amplitude part and a phase part.

In the existing legacy codebook configuration, the amplitude is composed of two stages, and is quantized into 4 bits between polarizations (i.e., the strongest coefficient is selected for each polarization, the larger polarization among these two coefficients is assumed to be 1, and the coefficients of the remaining polarizations are quantized into 4 bits), and within the same polarization, it is composed of 3 bits based on the strongest coefficient of each polarization.

Tables 6 and 7 show values corresponding to each quantization payload. Table 6 exemplifies the case of quantization between polarizations, and Table 7 exemplifies the case of quantization within the same polarization.

[Table 6]

| Index | 1 | 2 | 3 | 4 | 5 | ... | 15 | 16 |
|---|---|---|---|---|---|---|---|---|
| Value | 1 | $\left(\frac{1}{2}\right)^{\frac{1}{4}}$ | $\left(\frac{1}{4}\right)^{\frac{1}{4}}$ | $\left(\frac{1}{8}\right)^{\frac{1}{4}}$ | $\left(\frac{1}{16}\right)^{\frac{1}{4}}$ | ... | $\left(\frac{1}{2^{14}}\right)^{\frac{1}{4}}$ | 'reserved' |

[Table 7]

| Index | 1 | 2 | 3 | ... | 7 | 8 |
|---|---|---|---|---|---|---|
| Value | 1 | $\frac{1}{\sqrt{2}}$ | $\frac{1}{2}$ | ... | $\frac{1}{8}$ | $\frac{1}{8\sqrt{2}}$ |

The phase is configured to 4 bits (e.g., 16PSK), and 4-bit quantization is performed based on the strongest coefficient.

The following can be considered to improve the performance of CSI measurement and reporting in the CJT of M-TRP.

Rel-18 CJT codebook can be RRC-configured as mode 1 or mode 2 by higher layer signaling (e.g. RRC signaling). In case of mode 2, it is restricted to use the same FD basis for all TRPs. On the other hand, in mode 1, the FD basis can be configured differently for each TRP, and each TRP can be expressed as a codebook with a different M by N3 (i.e., the number of rows M and the number of columns N3) basis matrix.

Method for transmitting and receiving CSI

According to the Rel-18 MIMO work item, the purpose of type II codebook enhancement is to help a base station to perform better link level adaptation to time varying channels due to high mobility of UEs.

Specifically, the enhanced type II codebook with time domain compression can provide a base station with precoding information for multiple time instances instead of a single time instance that is vulnerable to channel aging, so that the base station can track and predict the time-varying channel direction and ultimately schedule a better modulation and coding scheme (MCS) and precoder.

- Channel measurement for type II codebook enhancement:
  Since type II codebook enhancement via time domain (TD) compression requires multi-channel measurements on the UE side, the existing UE must perform multi-channel measurements. According to the current specification, time domain channel/interference measurement restrictions can be enabled/disabled by the base station. When time domain channel/interference measurement restrictions are enabled (timeRestrictionForChannelMeasurements is set), the UE measures the latest CMR (channel measurement resource)/IMR (interference measurement resource) before the CSI reference resource, so a single measurement is used for channel estimation on the CSI reference resource. When time domain channel/interference measurement restrictions are disabled (timeRestrictionForChannelMeasurements is not set), the UE can measure multiple CMR/IMR instances before the CSI reference resource and it is up to the UE implementation how to estimate the channel in the CSI reference resource using these multiple measurements. With this unrestricted measurement setup, the UE can already compute CSI using multiple measurements. When codebook enhancements through TD compression are introduced in Rel-18, this unrestricted measurement setup is required to allow the UE to compute a PMI for multiple time instances.

Whether multi-channel measurements are possible depends on the periodicity of CMR/IMR as well as the time domain measurement limitation as described above. For aperiodic (AP) CMR/IMR, only a single measurement is possible because there is only one CMR/IMR instance without periodicity. On the other hand, periodic (P)/semi-persistent (SP) CMR/IMR can provide multiple opportunities for channel/interference measurements to the UE. However, since the minimum period of CSI-RS resources is 4 slots according to the current specification, it is necessary to consider whether sufficiently frequent measurement instances can be provided for high-speed UEs. If the CSI-RS resources are too sparse, the PMI accuracy may deteriorate due to poor TD compression, and if the CSI-RS resources are too dense, the CSI-RS overhead may increase.

- The multiple time instances represented by the enhanced type II codebook using TD compression are as follows:

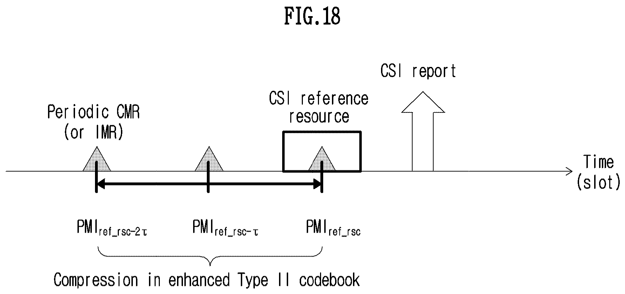

Similar to the legacy type II codebook using frequency domain (FD) compression that represents PMIs for multiple sub-bands, the new type II codebook using TD compression represents PMIs for multiple time instances, therefore the method for determining these multiple time instances should be discussed. The legacy CSI including PMI/RI/CQI represents a channel for a single time point, referred to as a CSI reference resource. However, the type II codebook applying TD compression should be able to provide PMIs not only in the CSI reference resource but also in other slots/symbols. Basically, these time instances can be defined as after (i.e., future) the CSI reference resource (in the case of FIG. 17) or before (i.e., past) the CSI reference resource (in the case of FIG. 18), which may have different impacts on the UE implementation.

A CSI reference resource may mean a frequency and time unit (i.e., resource) that a UE assumes is allocated/transmitted a PDSCH when calculating/deriving CSI, and may be defined as follows:

A CSI reference resource for a serving cell is defined as follows:

- In a frequency domain, a CSI reference resource is defined as a group of downlink physical resource blocks (PRBs) corresponding to a band in which the derived CSI is related.
- In a time domain, a CSI reference resource for CSI reporting in uplink slot n' is defined by a single downlink slot

$$n - n_{CSI\_ref} - K_{offset} \cdot \frac{2^{\mu_{DL}}}{2^{\mu_{K_{offset}}}}$$ . Here, $K_{offset}$ is a parameter configured by a higher layer as specified in section 4.2 of TS 38.213. And, $\mu_{Koffset}$ is a subcarrier spacing (SCS) configuration for $K_{offset}$ with a value of 0 for FR 1.

Here, $$n = \left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor$$ , $\mu_{DL}$ and $\mu_{UL}$ are SCS config-

urations for DL and UL, respectively. $N_{slot, offset}^{CA}$ and $\mu_{offset}$ are determined by the ca-SlotOffset configured by the higher layer for cells transmitting uplink and downlink as defined in section 4.5 of TS 38.211.

Here, for periodic and semi-persistent CSI reporting, i) if a single CSI-RS/SSB resource is configured for channel measurement, $n_{CSI\_ref}$ is a minimum value greater than or equal to $4 \cdot 2^{\mu DL}$ such that a CSI reference resource corresponds to a valid downlink slot, or ii) if multiple CSI-RS/SSB resources are configured for channel measurement, $n_{CSI\_ref}$ is a minimum value greater than or equal to $5 \cdot 2^{\mu DL}$ such that a CSI reference resource corresponds to a valid downlink slot.

In addition, here, for aperiodic CSI reporting, if a UE is indicated by DCI to report CSI in the same slot as a CSI request, $n_{CSI-ref}$ is determined such that a CSI reference resource is in the same valid downlink slot as the CSI request.

Otherwise, $n_{CSI\_ref}$ is a minimum value greater than or equal to $\left\lfloor Z' / N_{symb}^{slot} \right\rfloor$ such that slot n-$n_{CSI\_ref}$ corresponds to a valid downlink slot, where Z' corresponds to the delay requirement as defined in section 5.4 of TS 38.214.

FIG. 17 illustrates a PMI for multiple time instances not earlier than a CSI reference resource in a wireless communication system to which the present disclosure can be applied.

Referring to FIG. 17, a UE calculates the existing PMI$_{ref\_rsc}$ based on the DL channel of the CSI reference resource, which can be derived from the periodic CMR that is not later than the CSI reference resource. In addition, the UE calculates PMI$_{ref\_rsc+\tau}$ and PMI$_{ref\_rsc+2\tau}$ based on DL channels of the CSI reference resource+$\tau$ slot and the CSI reference resource+2$\tau$ slot, respectively, which are predicted from the periodic CMRs that are not later than the CSI reference resource. Finally, PMI$_{ref\_rsc}$, PMI$_{ref\_rsc+\tau}$, and PMI$_{ref\_rsc+2\tau}$ are compressed to reduce the PMI feedback overhead using an enhanced type II codebook with TD compression. Since this codebook includes future PMI that a UE is required to predict the DL channel after the CSI reference resource, it is robust to channel aging and the base station can use it for better link adaptation.

FIG. 18 illustrates a PMI for multiple time instances not later than a CSI reference resource in a wireless communication system to which the present disclosure can be applied.

Referring to FIG. 18, a UE calculates the legacy PMI$_{ref\_rsc}$ in the same manner as described in FIG. 17 above. However, unlike FIG. 17, the UE calculates PMI$_{ref\_rsc-\tau}$ and $_{PMIref\_rsc-2\tau}$ based on DL channels in the CSI reference resource-$\tau$ slot and the CSI reference resource-2$\tau$ slot, which are periodic CMRs that are not later than the reference resource. FIG. 2 shows an example where the periodic CMRs are in the CSI reference resource, the CSI reference resource-$\tau$ slot, and the CSI reference resource-2$\tau$ slot. Finally, PMI$_{ref\_rsc}$, PMI$_{ref\_rsc-\tau}$, and PMI$_{ref\_rsc-2\tau}$ are compressed using an enhanced type II codebook with TD compression to reduce the PMI feedback overhead. Since this codebook includes the past PMI, a UE does not need to predict additional DL channels and is less complex than FIG. 17. However, there is a problem that PMI$_{ref\_rsc-\tau}$ and PMI$_{ref\_rsc-2\tau}$ are older than the existing PMI$_{ref\_rsc}$.

A time instance may mean a point in time (e.g., a slot) at which a PMI is calculated. In FIG. 17, the time instance represents a CSI reference resource (slot), a CSI reference resource+$\tau$ slot, and a CSI reference resource+2$\tau$ slot. In FIG. 18, the time instance represents a CSI reference resource (slot), a CSI reference resource-$\tau$ slot, and a CSI reference resource-2$\tau$ slot.

To determine the time instance of the channel expressed by the PMI as shown in FIG. 17 and FIG. 18, a base station may perform the following signaling to a UE. For example, it may be indicated as a parameter of RRC signaling for codebook configuration.

For example, first, it can be indicated/signaled how many time instances will be expressed as a PMI. In the examples of FIGS. 17 and 18, the number of time instances is exemplified as 3, but the present disclosure is not limited thereto. The number of time instances can be configured in various ways considering the temporal variability of the channel, and for this configuration, a UE can report its velocity information, Doppler information (Doppler shift/spread), etc. to a base station. Alternatively, a UE can report its preferred number of time instances from its velocity or Doppler information, etc. to a base station, and the base station can confirm or make a final selection (e.g., select a different number of time instances). For example, a UE can report candidate values for the number of time instances to a base station as a capability.

In addition, for example, an interval between time instances can be indicated/signaled, which indicates the $\tau$ value expressed in FIG. 17 and FIG. 18. The $\tau$ value can be configured in various ways considering the time variability of the channel, and for this configuration, a UE can report its velocity information, Doppler information (Doppler shift/spread), etc. to a base station. Alternatively, a UE can report its preferred $\tau$ value from its velocity or Doppler information, etc. to a base station, and the base station can confirm or make a final selection (e.g., determine a different $\tau$ value). For example, the $\tau$ value can be expressed in absolute time (e.g., ms, etc.), slot, OFDM symbol, etc. A UE can report candidate values for the $\tau$ value to a base station as a capability.

In addition, for example, it can be indicated/signaled which slot/symbol the time instances are located in. For example, a time instance offset can be signaled, and the time instance offset can be determined based on a CSI reference resource. In other words, it can be indicated/signaled which time instance a CSI reference resource corresponds to among the configured time instances. In FIG. 17, the CSI reference resource is configured to the first time instance among three time instances, and a base station can configure/indicate a time instance offset of the CSI reference resource to 0 to indicate this. Since the CSI reference resource is configured to the first time instance, the remaining time instances after the first time instance are configured after the CSI reference resource. In FIG. 18, the CSI reference resource is configured to the last (third) time instance among the three time instances, and a base station can configure/indicate a time instance offset of the CSI reference resource to 2 to indicate this. Since the CSI reference resource is configured to the third time instance, the remaining time instances before the third time instance are configured before the CSI reference resource. The time instance offset can be configured in various ways considering the temporal variation of the channel, and for this configuration, a UE can report its velocity information, Doppler information (Doppler shift/spread), etc. to a base station. Alternatively, a UE can report its preferred time instance offset from its velocity or Doppler information, etc. to a base station, and the base station can confirm or make a final selection (e.g., determine a different time instance offset value). In addition, depending on the UE implementation, UEs can be divided into a UE that can configure the time instance offset (i.e., CSI reference resource) only to the last time instance, as in FIG. 18, and a UE that can configure the time instance offset (i.e., CSI reference resource) to other time instances than the last time instance, as in FIG. 17, and a UE can report this to a base station as a capability. The former (in the case of FIG. 18) is simple to implement because a UE does not need to perform channel prediction, but the latter (in the case of FIG. 17) can be complex to implement because it needs to perform channel prediction. More specifically, in the latter case (in the case of FIG. 17), a UE can additionally report the minimum value of the configurable time instance offset or a candidate value of the configurable time instance offset to a base station. The smaller the minimum value, the more predictions need to be performed, therefore the UE implementation can be complex.

In the above proposal, a grid of time instances is configured by the number of time instances and an interval (i.e., the $\tau$ value), and a slot/symbol in which the grid of time instances is located can be determined by a time instance offset for a CSI reference resource.

In a similar but different way of expression, a grid of time instances can be determined by configuring a window of time instances to slots/symbols and configuring the number of time instances within the window. That is, time instances spaced equally apart as the number of time instances within the window can be configured. For example, if a window (which can be referred to as a CSI reporting window) is configured to 3 slots and the number of time instances is configured to 3, a grid of time instances is expressed as 3 consecutive slots. Here, if a time instance offset is 0, the final time instance is configured to the CSI reference resource slot, the CSI reference resource+1 slot, and the CSI reference resource+2 slot.

In the above example, time instances are configured to be equally spaced from each other. However, if the channel time variability changes over time and is predictable, such an evenly spaced distribution may be inefficient. For example, when N time instances are configured, if the channel time variability is severe in a front part of an entire time interval represented by a PMI and is small in a back part, arranging time instances densely in the front part and sparsely in the back part can increase the compression efficiency and accuracy for TD compression. For example, if a CSI reference resource is located in the first time instance, the second time instance can be located in the CSI reference resource+1 slot, the third time instance can be located in the CSI reference resource+2 slot, and the fourth time instance can be located in the CSI reference resource+5 slot. Therefore, an interval between time instances may not be equally spaced, and for this purpose, a UE can report a time instance location to a base station (together with the CSI). Alternatively, a base station can indicate/configure a time instance location to a UE. For example, it can be indicated in UL DCI that triggers AP CSI reporting.

Some parameters related to the proposed time instance configuration are fixed (with predefined values), and the remaining parameters can be configured by a base station or reported by a UE.

In the above proposal, a time instance offset is described based on a CSI reference resource, however this is an example and the present disclosure is not limited thereto. For example, a time instance offset may be configured based on a CSI reporting time (i.e., a time at which CSI is reported/transmitted) or the last time point of a CSI measurement window. Here, the CSI measurement window means a time interval in which a channel/interference can be measured for CSI calculation. For example, an offset (e.g., the number of slots) between the first time instances among time instances from a CSI reporting time or the last time point of a CSI measurement window may be configured as a time instance offset.

In the above proposal, the time instance offset can be configured to a negative value or a value greater than or equal to the number of time instances (or the number of time instances * the interval between time instances). For example, when the time instance offset is configured based on the CSI reference resource, if the time instance offset is negative, time instances can exist only in the future than the CSI reference resource. For example, when the number of time instances is 3, the interval between time instances is 1 slot, and the time instance offset configured based on the CSI reference resource is -1, the time instances can be configured to CSI reference resource+1 slot, CSI reference resource+2 slot, and CSI reference resource+3 slot.

On the other hand, if it is configured to a value greater than the number of time instances (or the number of time instances * the interval between time instances), time instances can exist only in the past before the CSI reference resource. For example, when the number of time instances is 3, the interval between time instances is 1 slot, and the time instance offset set based on the CSI reference resource is 4, the time instances can be configured to the CSI reference resource-3 slot, the CSI reference resource-2 slot, and the CSI reference resource-1 slot.

The range of values that can be configured to this time instance offset can be reported by a UE to a base station (as a capability), and in this case, the base station can indicate/configure the time instance offset value within this range.

When a base station indicates a UE with parameters/configuration values related to the proposed method, in the case of AP CSI reporting, it may be indicated together through an AP CSI reporting trigger field of the DCI. Alternatively, it may be indicated through the configuration information related to CSI reporting (e.g., CSI-ReportConfig IE) or in the configuration information related to a PMI codebook.

In addition, a UE may report (as a capability) the maximum value for the number of time instances and/or the time instance interval to a base station. Since the number of time instances and/or the time instance interval may increase as a UE requires more calculations for CSI calculation, the UE may report the maximum value to a base station, and the base station may configure the number of time instances and/or the time instance interval to the UE within a range that does not exceed the maximum value. Alternatively, a UE may report (as a capability) the combination of the number of time instances and the interval to a base station. For example, a UE may report to a base station the maximum interval slot when the number of time instances is N1, and the maximum interval slot when the number of time instances is N2. In other words, a UE may report to a base station the maximum time instance interval that can be supported by each of the number of time instances. Alternatively, a UE may report to a base station the maximum number of time instances that can be supported by each of the time instance intervals. As the number of time instances increases, the maximum interval supported by a UE may decrease, so this reporting method may be effective.

This reporting method may be applied even when a window of time instances is used instead of an interval of time instances, by replacing the interval of time instances with the window of time instances. That is, a UE may report to a base station the maximum window of time instances that can be supported for each number of time instances. Alternatively, a UE may report to a base station the maximum number of time instances that can be supported for each window of time instances.

The time instances for deriving CSI (or PMI) can be finally applied/determined through the combination/combination of the above proposals.

In the Rel-18 standard, in addition to the spatial domain basis vector and the frequency domain basis vector for the Rel-17 enhanced Type II codebook, a standardization is in progress to define an operation to compress PMI information for multiple time instances and express/report it as a single codebook by adding a Doppler domain (DD) (or time domain) basis vector (DD basis vector) (i.e., DD (doppler domain) compression). For this purpose, various codebook parameters have been introduced as shown in Table 8 below, and discussions are underway to determine their values.

[Table 8]

| Parameter | Description | Signaling | Agreed value | FFS (for future study) |
|---|---|---|---|---|
| N4 | DD basis vector length | RRC | 1, 2, 4, 8 | 3, 5, 6, 10, 16, 32, also supported parameter combination(s ) |
| d (slots) | Time unit (similar to frequency unit in type II enhanced codebook) | | For AP CSI-RS CMR, d=m where m= {1,2 } | For SP/P CSI-RS, d < m, d > m where d=1 or related to the period of CSI-RS |
| $W_{CSI}$ =N4*d | Time window to be compressed | | | |
| $\delta$ (in slots) Offset between reporting slot n and start slot of $W_{CSI}$ | | RRC | 0 and 2 | 1, 3, 4, and 5 |
| Q | Number of DD basis | | 2 | 3/4, supported parameter combination(s ) |

(continued)

| Parameter | Description | Signaling | Agreed value | FFS (for future study) |
|---|---|---|---|---|
| Parameter K (Number of AP CSI-RS resources for CMR) | | RRC | 4,8 | 5, 12, 16 |
| m (offset between 2 AP CSI-RS resources for CMR, per slot) | | RRC | 1, 2 | |
| NZC (nonzero coefficient ) bitmap | Q different 2-dimensional bitmaps are introduced | | | FFS: Reduced additional overhead for bitmap(s) FFS: Whether the number of NZCs is upper bounded across all basis vectors or per DD basis vector |
| SD (spatial domain)/FD (frequency domain) codebook parameters | Definitions and supported values for each SD/FD codebook parameter follow the legacy specifications | | | FFS: Supported parameter combinations considering SD, FD, and DD codebook parameters |
| Number of CQIs | | | 1 | FFS: Multiple X CQIs 3 alternatives for defining CQI* |
| X number of CQIs | | | | If supported, given a CSI reporting window $W_{CSI}$ (in slots), the PMI(s) associated with the X value(s) and the CQI are also determined |

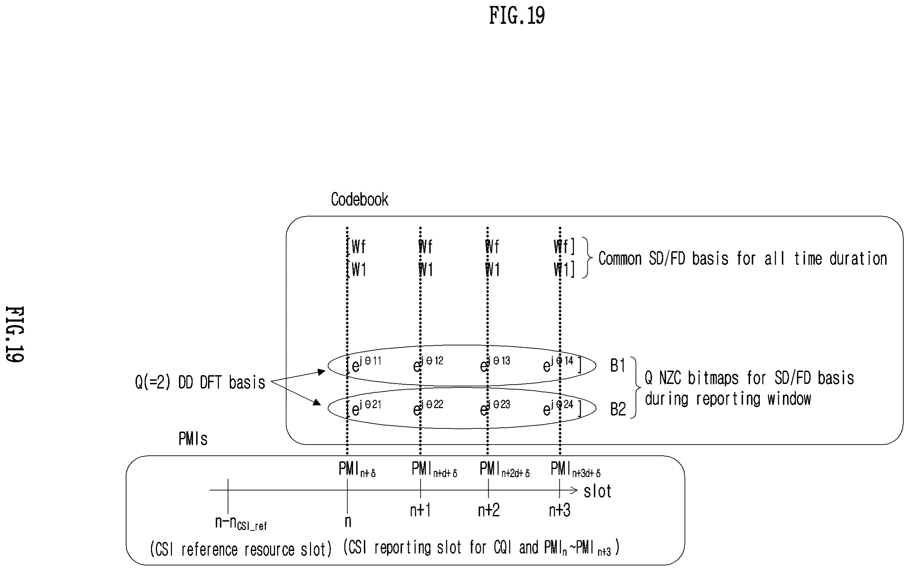

FIG. 19 illustrates PMI information indicated by a codebook for a specific codebook parameter in a wireless communication system to which the present disclosure can be applied.

Fig. 19 illustrates a PMI reporting window based on reporting slot n (i.e., mode 1) when d = 1 slot, $\delta$ (delta) = 0 slot, N4 = 4, and Q = 2.

The CSI reporting window starts with an offset of delta slots for the CSI reporting slot n. In the example of FIG. 19, since delta = 0, the CSI reporting window starts from CSI reporting slot n. Here, the CSI reporting window consists of d*N4 slots. In the example of FIG. 19, since d = 1, the time unit per PMI is 1 slot, and since N4 = 4, DD domain compression is performed for a total of 4 PMIs.

In other words, according to UE capability, a UE configured with a CSI reporting configuration (CSI-ReportConfig) having a higher layer parameter N4 and a reporting quantity (reportQuantity) set to 'cri-RI-PMI-CQI' is assumed to support UE-side CSI prediction. The reported PMI indicates predicted precoder matrices associated with N4 consecutive slot intervals, each of which has a duration of d slots. Here, a value of N4 $\in$ {1,2,4,8} is configured by the higher layer parameter N4. If a UE is configured with an aperiodic CSI-RS resource set for channel measurement, a value of a time unit d $\in$ {1,m} is configured by the higher layer parameter d as the number of slots. If a UE is configured with a periodic or semi-persistent CSI-RS resource set for channel measurement, a value of d is equal to a period of a CSI-RS resource. The earliest of N4 slot intervals starts from slot l = n + delta, where n is an uplink slot in which CSI is reported, and a value of a slot offset delta $\in$ {- $n_{CSI\_ref}$,0,1,2} is configured by the higher layer parameter delta. Here, delta = $n_{CSI\_ref}$ can be configured according to the UE capability.

A UE predicts N4 PMIs and reports them to a base station. Instead of generating each of the N4 PMIs and reporting them to the base station, it compresses the N4 PMIs using DD basis vectors to generate one PMI, and reports the generated one PMI to the base station. For this purpose, Q DD basis vectors are used and 2L SD basis vectors and M FD basis vectors are used. That is, a total of 2L*M*Q vector combinations are possible for the 2L SD basis vectors, M FD basis vectors, and Q DD basis vectors, and a weighting value is applied by multiplying an independent coefficient for each vector combination. Each vector combination is expressed as coefficient * SD basis vector (x) FD basis vector (x) DD basis vector (here, the symbol (x) means Kronecker product), and a PMI compressed in the space, frequency, and time axes is expressed through the sum of these vector combinations. In FIG. 19, W1 denotes an SD basis matrix composed of SD basis vectors, and Wf denotes an FD basis matrix composed of FD basis vectors.

In the present disclosure, in case of reporting CSI for multiple time instances as above, when PMI for three time instances is compressed and reported to the base station as in the examples of FIGS. 17 and 18, the UE can calculate/report PMI through a codebook having a structure similar to the agreement in Table 9 below using Q DD basis vectors having length 3.

[Table 9]

| |
|---|
| For the Rel-18 Type-II codebook refinement for high/medium velocities, support the following codebook structure where $N_4$ is gNB-configured via higher-layer signaling:<br><br>• For $N_4=1$, Doppler-domain basis is the identity (no Doppler-domain compression) reusing the legacy $W_1$, $\tilde{W}_2$, and $W_f$, e.g. $W_1\tilde{W}_2(W_f)^H$<br><br>• For $N_4>1$, Doppler-domain orthogonal DFT basis commonly selected for all SD/FD bases reusing the legacy $W_1$ and $W_f$, e.g. $W_1\tilde{W}_2(W_f\otimes W_d)^H$ |

In Table 9, $W_1$ represents a spatial domain (SD) basis matrix, $W_f$ represents a frequency domain (FD) basis matrix, $W_d$ represents a Doppler domain (DD) basis matrix, and $\tilde{W}_2$ represents a matrix composed of coefficients applied between SD/FD/DD basis vectors.

When $N_4=1$, the DD basis can be identical to that using legacy $W_1$, $\tilde{W}_2$, $W_f$ (i.e., no Doppler domain compression is applied), and when $N_4>1$, the DD orthogonal DFT basis can be commonly selected for all SF/FD basis using legacy $W_1$, $W_f$.

Referring to Table 8 and Table 9, in the Rel-18 Type-II codebook, $N_4$ means the DD basis vector length, and Q means the number of DD basis vectors used in the codebook, both of which the base station configures/indicates to the UE by RRC signaling. In addition, since $N_4$ means the number of time instances of the PMI to be compressed, in the case of FIGS. 17 and 18, $N_4 = 3$. That is, the UE can select Q vectors from a DFT matrix of size $N_4 \times N_4$ (i.e., $N_4$ by $N_4$) to configure a $W_d$ matrix, and express it through a Kronecker product with $W_f$, which is an FD basis matrix.

As described above, the UE predicts the channel for multiple time instances and calculates the PMI for the predicted channel. However, the channel prediction accuracy may be low for some time instances. For example, when the UE estimates the channel for 8 time instances (i.e., when $N_4=8$), the channel prediction accuracy may be relatively low for the last 2 time instances corresponding to the most future time points. In this case, it is preferable to compress only the remaining PMIs, excluding the PMIs for the two time instances, rather than compressing and sending the PMIs for the two time instances together. This is because the PMIs for the two time instances may have low prediction accuracy and may be of no use, and compressing them with other PMIs may increase the quantization error (i.e., information loss due to compression) of the remaining 6 PMIs with high prediction accuracy. In other words, by excluding those two PMIs from compression, the quantization error (i.e., information loss due to compression) for the remaining six PMIs can be reduced.

Therefore, the present disclosure proposes a method in which a UE calculates a codebook/PMI by excluding one or more time instances from among the time instances configured by the base station and reports the calculated codebook/PMI to the base station. In the previous example, the UE can calculate the codebook/PMI by puncturing/assuming the last two elements of each length 8 DD basis vector to 0 to exclude two PMIs with low prediction accuracy.

In the description of the present disclosure below, a time instance refers to a predetermined time resource unit and may be configured/defined as, for example, one slot, one or more slots, or one or more symbols. Furthermore, time instances may be configured continuously or discontinuously.

According to one embodiment of the present disclosure, the UE may calculate the codebook/PMI by puncturing some elements of each DD basis vector (i.e., elements corresponding to excluded time instances) and assuming them to be "0." Here, "puncturing" may refer to an operation of replacing/assuming the value of the corresponding element as 0.

Alternatively, another method for implementing the same functionality may be to remove the value corresponding to the puncturing element from the basis vector. That is, the UE may calculate the codebook/PMI based on the DD basis vector derived by removing some elements of each DD basis vector. For example, if the 2nd and 4th elements in a length 4 basis vector $[1\ 2\ 3\ 4]^T$ are punctured, $[1\ 2\ 3\ 4]^T$ can be replaced with $[1\ 3]^T$, or if the 3rd or more elements are punctured, $[1\ 2\ 3\ 4]^T$ can be replaced with $[1\ 2]^T$. As a result, the value of $N_4$ itself can change from 4 to 2.

Here, for some elements, the UE can select specific n1, n2, n3, ..., nk-th elements (i.e., select one or more noncontiguous/contiguous elements) and apply them commonly to all DD basis vectors (i.e., puncture/assume the corresponding element value to 0 or generate a DD basis vector with the corresponding element value removed). Alternatively, the UE can select n and puncture the n-th or higher elements of all DD basis vectors or remove the n-th or higher elements (i.e., select one or more consecutive elements starting from the n-th element).

The range and/or minimum and/or maximum values of elements selectable by the UE may be preconfigured by the base station for the UE. For example, it may be configured to n > $N_4/2$ (i.e., the minimum value $N_4/2$) or configured to n > 4 (i.e., the minimum value 4). Furthermore, for example, different ranges and/or minimum and/or maximum values may be set for each rank (i.e., individually).

Information for punctured elements (or information about removed elements) may be indicated using a bitmap.

For example, the kth bit of a bitmap comprising $N_4$ bits can indicate whether the kth element is punctured (or removed). Alternatively, the very first element can be excluded from puncturing (or removal) (i.e., the channel is always reported), and a bitmap comprising $N_4-1$ bits can be used to indicate whether the second to $N_4$-th elements are punctured (or removed). Alternatively, for example, if the UE reports the n value (e.g., if the n-th or higher elements are punctured (or removed), the UE can report the n value itself instead of the bitmap.

The UE may select an element to puncture (or remove) and report its value (e.g., n (i.e., the element where puncturing/removal is started) or {n1, n2, n3, ..., nk} (i.e., the element being punctured/removed) to the base station, and the base station may know that the time instance corresponding to the puncturing (or removal) is excluded from the PMI report based on the report from the UE.

A CSI report may include two parts (i.e., part 1 and part 2). Part 1 may have a fixed payload size and may be used to identify the number of information bits in part 2. In addition, part 1 may be transmitted in its entirety before part 2. In addition, parts 1 and 2 may be encoded separately. For example, part 1 may include RI (if reported), CQI, and the total number of non-zero amplitude coefficients reported across layers. In this case, part 2 may include the PMI. As another example, part 1 may include the RI (if reported), the CQI or the first CQI, and the total number of non-zero amplitude coefficients reported across the layers. In this case, part 2 may include the second CQI and the PMI.

Since the puncturing (or removal) information described above (i.e., information on which element is punctured or removed) does not affect the codebook payload, it may be encoded in CSI part 1 and reported to the base station. Alternatively, if the puncturing element (or removed element) is affected by some codebook parameter of CSI part 1, the puncturing (or removal) information (i.e., information on which element is punctured or removed) may be encoded in CSI part 2 and reported to the base station.

The UE can consider multiple time instances when calculating CQI, as well as PMI.

Here, the UE can calculate the highest CQI for multiple time instances. For example, when calculating a single CQI for multiple time instances, the UE can calculate the highest CQI that satisfies a target block error rate (BLER) for all of the time instances. Alternatively, the UE can calculate the highest CQI that satisfies the target BLER for a portion of the time instances (e.g., i) the first and middle time instances, or ii) the first and last time instances). In this case, the UE can calculate the CQI without considering (i.e., not using it for the CQI calculation) the time instances corresponding to the punctured (or removed) elements.

Additionally, the UE may calculate multiple CQIs for multiple time instances. For example, the UE may calculate a CQI for each of, for example, $N_4$ time instances, or the UE may calculate a CQI for each of some of the $N_4$ time instances (e.g., i) the first time instance and the middle time instances, or ii) the first time instance and the last time instance). In this case, the UE may calculate the CQI without considering the time instance corresponding to the punctured (or removed) element (i.e., not using it for the CQI calculation), or the UE may not calculate/report the CQI for the time instance corresponding to the punctured (or removed) element (i.e., only calculate the CQI for the remaining time instances (or some of the remaining time instances).

As described above, when the UE excludes one or more time instances from among the time instances configured by the base station, the UE may do so based on the prediction accuracy for the channel. In other words, the base station may configure a threshold value for determininig the prediction accuracy for the UE so that the UE can determine whether to puncture (or remove) specific one or more elements based on the prediction accuracy. That is, the UE may puncture (or remove) the one or more elements only when the prediction accuracy for the channel is lower than the threshold value.

In addition, instead of reporting the CQI (and/or PMI) for the punctured (or removed) time instance, the UE may report the accuracy/confidence level of the CQI (and/or PMI) estimation/prediction value of the corresponding time instance or the difference value from the threshold (hereinafter referred to as prediction accuracy information) to the base station. Accordingly, the base station can receive information on channel change/prediction performance in the time domain (i.e., on the time axis). Here, as described above, when the UE encodes the information on the punctured (or removed) time instance through CSI part 1 and reports it to the base station, the UE may encode the prediction accuracy information on the punctured (or removed) time instance through CSI part 2 and report it to the base station.

In addition, the base station can configure for the UE which time instance the prediction accuracy is reported for, separately from the time instance punctured (or removed) by the UE, or the UE can select which time instance the prediction accuracy is reported for and report the prediction accuracy of the corresponding time instance to the base station. Here, when the UE selects a time instance for which the prediction accuracy is to be reported and reports it to the base station, the time instance information (i.e., information about the time instance for which the prediction accuracy is reported) can be reported using the method for reporting information on punctured (or removed) time instances proposed above. That is, the UE can select time instances {n1, n2, n3, ..., nk} for which the prediction accuracy is to be reported (e.g.,

using a bitmap) and report them to the base station as CSI part 1 or CSI part 2. Alternatively, the UE may select a value n, which is the start time of the time instance for which prediction accuracy is to be reported (in this case, prediction accuracy is reported for the nth to $N_4$-th time instances) and report it to the base station as CSI part 1 or CSI part 2.

As described above, when puncturing is applied to one or more elements of the basis vector (or when one or more elements are removed to reduce the basis vector length), CSI compression for the corresponding time instance is omitted, so that the same compression effect can be achieved with fewer basis vectors. Therefore, when puncturing is applied to one or more elements (or when one or more elements are removed to reduce the basis vector length), the PMI overhead can be reduced by reducing the number of basis vectors Q. For example, when $N_4$ and Q are configured from the base station, if the number of elements that are not punctured (or not removed) through puncturing (or through element removal) (i.e., # of non-puncturing elements = $N_4$ - # of puncturing elements) is greater than $N_4/4$ and less than or equal to $N_4/2$, the Q value can be reduced to Q=Q/2. Alternatively, if the number of non-punctured (or non-removed) elements through puncturing (or element removal) is greater than or equal to $N_4/8$ and less than or equal to $N_4/4$, then the value of Q can be reduced to Q=Q/4. That is, if $N_4/2n+1$ < the number of non-punctured (or non-removed) elements (i.e., # of non-puncturing elements <= $N_4/2n$), then the value of Q can be reduced to Q=Q/2n.

In the proposed method of the present disclosure described above, a time instance may refer to a specific slot, but the present disclosure is not limited thereto. That is, in the present disclosure, a time instance may refer to a time duration comprised of multiple slots (or comprised of multiple symbols).

Furthermore, the proposed method of the present disclosure described above may be ultimately applied through a combination/aggregation of one or more proposed methods.

Furthermore, the proposed method of the present disclosure described above has been mainly explained using a codebook to which DD compression using a DD basis is applied, but this is for convenience of explanation, and the proposed method of the present disclosure can be equivalently applied to a codebook to which TD compression using a TD (time domain) basis is applied.

Furthermore, the proposed method of the present disclosure described above can also be applied when an AIML UE predicts and reports future CSI (e.g., CSI for a channel after a CSI reporting time or CSI for a channel after a CSI reference resource) to a base station. For example, the UE can be configured to function for the AI/ML operation illustrated in FIG. 12, and can acquire/derive future CSI through channel/CSI data collection, model training using the data, and CSI inference. In other words, if multiple time instances configured by the base station are after the CSI reporting time or CSI reference resource (or if some of the multiple time instances configured by the base station are after the CSI reporting time or CSI reference resource), the UE may calculate the codebook/PMI by excluding one or more time instances from the configured time instances and report it to the base station.

In addition, in the description of the proposed method of the present disclosure described above, the parameters exemplified/described, or whether or not the proposed method is applied, etc., may be configured/indicated by the base station to the UE, or may be reported by the UE to the base station, or may be configured/defined as a fixed value.

In addition, although the proposed method of the present disclosure described above has been described based on the Rel-16 eType II codebook for convenience of explanation, the same proposed method may be extended and applied to the Rel-17 FeType II codebook, and may also be extended and applied to codebooks defined in subsequent releases.

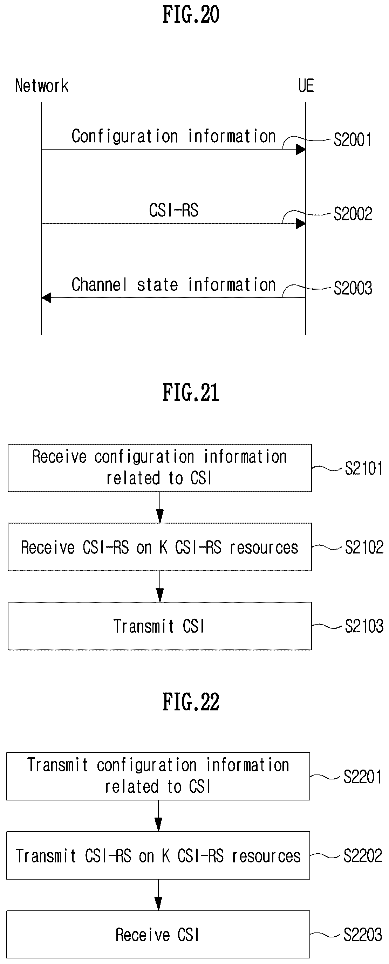

FIG. 20 is a diagram illustrating a signaling procedure between a network and a UE for a method for transmitting and receiving channel state information according to an embodiment of the present disclosure.

FIG. 20 illustrates signaling between a network (e.g., TRP 1, TRP 2) and a terminal (e.g., UE) in a situation of multiple TRPs (i.e., M-TRPs, or multiple cells, all TRPs hereinafter may be replaced with cells) to which the methods proposed in the present disclosure may be applied.

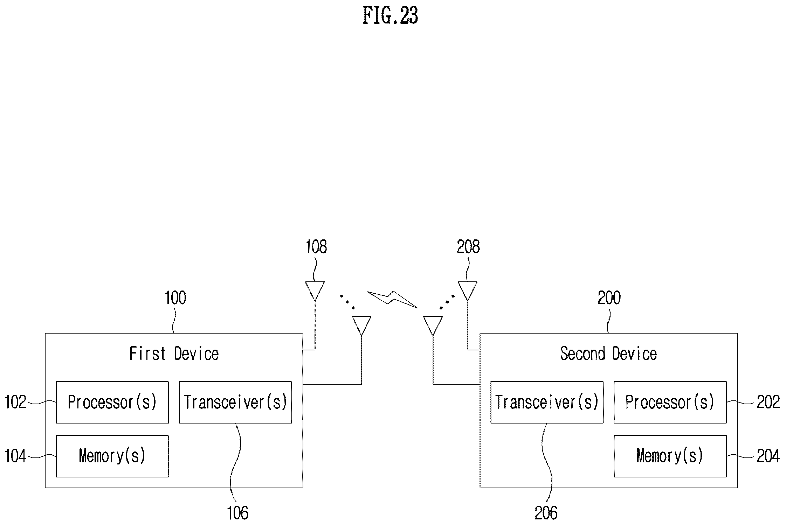

Here, UE/Network are only examples and may be replaced with various devices as described in FIG. 23 below. FIG. 20 is only for convenience of explanation and does not limit the scope of the present disclosure. In addition, some step(s) shown in FIG. 20 may be omitted depending on the situation and/or setting.

In the following description, the network may be one base station including multiple TRPs, and may be one cell including multiple TRPs. For example, an ideal/non-ideal backhaul may be configured between TRP 1 and TRP 2 constituting the Network. In addition, the following description is described based on multiple TRPs, but this may be equally extended and applied to transmission through multiple panels. In addition, in the present disclosure, an operation of a UE receiving a signal from TRP1/TRP2 may also be interpreted/described (or may be an operation) as an operation of the UE receiving a signal from the Network (via/using TRP1/2), and an operation of the UE transmitting a signal to TRP1/TRP2 may also be interpreted/described (or may be an operation) as an operation of the UE transmitting a signal to the Network (via/using TRP1/TRP2), and vice versa.

In addition, as described above, "TRP" may be replaced with expressions such as panel, antenna array, cell (e.g., macro cell / small cell / pico cell, etc.), transmission point (TP), base station (gNB, etc.). As described above, TRP may be distinguished according to information (e.g., index, identifier (ID)) on a CORESET group (or CORESET pool). For example, when one UE is configured to perform transmission and reception with multiple TRPs (or cells), this may mean that multiple CORESET groups (or CORESET pools) are configured for one UE. Such configuration of CORESET groups (or CORESET pools) may be performed via higher layer signaling (e.g., RRC signaling, etc.). In addition, the base station may be a general term for an object that performs data transmission and reception with the UE. For example, the base station may be a concept that includes one or more TPs (Transmission Points), one or more TRPs (Transmission and Reception Points), etc. In addition, the TP and/or TRP may include a panel of the base station, a transmission and reception unit, etc.

Referring to Fig. 20, for convenience of explanation, signaling between one network (base station) and a UE is considered, but it is obvious that the signaling method can be extended and applied to signaling between multiple TRPs and multiple UEs.

Referring to FIG. 20, a network transmits configuration information related to channel state information (CSI) to a UE (S2001). That is, the UE receives configuration information related to channel state information (CSI) from the network.

The configuration information related to the CSI may include at least one of CSI-IM (interference management) resource configuration information, CSI measurement configuration information, CSI resource configuration information, and CSI report configuration information.

In addition, the configuration information related to the CSI (particularly, the configuration information related to the CSI report) may include information regarding the proposed method described above.

For example, the configuration information may include information regarding the length of the DD (Doppler domain) (and/or TD (time domain)) basis vector (i.e., the number of time instances for CSI calculation/derivation) (e.g., N4). In other words, the configuration information may include information regarding the time instances for CSI calculation/derivation. For example, the CSI report configuration information may include codebook configuration information, and the codebook configuration information may include information regarding the DD basis vector length (e.g., vectorLengthDD) .

For example, the configuration information may include information for a threshold that the UE will use to determine channel prediction accuracy. Furthermore, the configuration information may further include information for the time instances at which the UE should report channel prediction accuracy.

The network transmits a CSI-RS to the UE on one or more (i.e., K, where K is a natural number) CSI-RS resources (S2002). That is, the UE receives a CSI-RS from the network on one or more (i.e., K, where K is a natural number) CSI-RS resources.

Here, the UE may receive a CSI-RS through one or more antenna ports on one or more CSI-RS resources based on the configuration information.

The network receives channel state information (CSI) (feedback/report) from the UE (S2003). That is, the UE transmits channel state information (CSI) (feedback/report) to the network.

Here, channel state information (CSI) (feedback/reporting) may be transmitted via an uplink physical layer channel (e.g., PUCCH or PUSCH). Furthermore, the CSI may include at least one of a precoding matrix indicator (PMI), a channel quality indicator (CQI), an RI, and a signal intensity indicator (LI).

The CSI reported by the UE to the network may be derived/generated based on the proposed method described above.

Here, the CSI may include a PMI corresponding to indices of a codebook indicating precoding matrix(s). For example, the codebook may be a codebook based on (linear combining) of SD basis vector(s), FD basis vector(s), and DD basis vector(s).

Additionally, the PMI may indicate precoding matrices for each of a plurality of time instances (or a plurality of (contiguous) slot intervals).

Here, the precoding matrices indicated by the PMI can be determined from a plurality of vectors (i.e., DD basis vectors). In addition, the precoding matrices indicated by the PMI can be determined from L vectors (i.e., SD basis vectors) + $M_\upsilon$ vectors (i.e., FD basis vectors, layer l=1,...,$\upsilon$) + Q vectors (i.e., DD basis vectors). In other words, the precoding matrix can be determined (via linear combination) from the SD basis vector, the FD basis vector, and the DD basis vectors.

For example, the PMI can indicate precoding matrices for each of the remaining time instances, excluding one or more time instances, among the plurality of time instances configured by the base station.

As described above, the precoding matrices indicated by the PMI can be determined from a plurality of vectors. Here, for example, i) each of the plurality of vectors (e.g., DD basis vectors) may have one or more elements corresponding to one or more time instances considered as 0, among the plurality of elements corresponding to the plurality of time instances (i.e., multiple time instances configured by the base station). Alternativley, ii) each of the plurality of vectors (e.g., DD basis vectors) may be generated by removing one or more elements among the plurality of elements (i.e., multiple elements corresponding to multiple time instances configued by the base station) (e.g., reducing the length of the DD basis vector). For example, it is assumed that the base station configures the DD (Doppler domain) (and/or TD (time domain)) basis vector length (i.e., the number of time instances for CSI calculation/derivation) to 4 (e.g., $N_4$). In this case, when the UE determines that the first and third elements (i.e., the first and third time instances) are excluded for PMI calculation/derivation, in the case i), the UE may generate a precoding matrix based on the vector $[0 \ x \ 0 \ x]^T$ (where x denotes the corresponding element value), or in the case ii), the UE may generate a precoding matrix based on the vector $[x \ x]^T$ (where x denotes the corresponding element value, and the first and third elements are excluded).

Additionally, the CSI may include information for one or more elements. In other words, it may include information for one or more elements excluded from the generation of the precoding matrix among the plurality of elements configured by the base station. For example, the information for the one or more elements may correspond to a bitmap indicating the one or more elements (i.e., each bit of the bitmap corresponds one-to-one to each element) or a minimum value of the one or more elements (i.e., all elements greater than or equal to the minimum value in ascending order of the indices of the plurality of elements are excluded).

Additionally, one or more channel quality indicators (CQIs) for the plurality of time instances may be calculated for the remaining time instances, excluding the one or more time instances, among the plurality of time instances.

Additionally, one or more time instances may be excluded from the plurality of time instances based on the channel prediction accuracy being lower than a threshold predetermined in advance or configured by the base station. In other words, the UE may exclude time instances with channel prediction accuracy lower than the threshold configured by the base station.

Additionally, the CSI may include information for the channel prediction accuracy (e.g., information for the value or level of accuracy) for the one or more time instances or information for a difference from the threshold.

Additionally, the CSI may include information for a difference from the threshold for one or more time instances configured by the base station or selected by the UE. In other words, apart from the time instances excluded from the generation of precoding matrices, the CSI may include information for a difference from the threshold for one or more time instances configured by the base station or selected by the UE.

In addition, based on one or more elements of the plurality of vectors that determine the precoding matrices indicated by the PMI being considered as 0 or one or more elements being removed, the number of the plurality of vectors may be determined to be smaller than when determining the precoding matrices for each of the plurality of time instances.

FIG. 21 is a diagram illustrating an operation of a UE for a method for transmitting and receiving channel state information according to an embodiment of the present disclosure.

FIG. 21 illustrates an operation of a UE based on the methods proposed above. The example of FIG. 21 is provided for convenience of explanation and does not limit the scope of the present disclosure. Some step(s) illustrated in FIG. 21 may be omitted depending on circumstances and/or settings. In addition, the UE in FIG. 21 is only an example and may be implemented as a device illustrated in FIG. 23 below. For example, the processor (102/202) of FIG. 23 may control the transceiver (106/206) to transmit and receive channels/signals/data/information, etc., and may also control the processor (102/202) of FIG. 23 to store the channels/signals/data/information to be transmitted or received in the memory (104/204).

Referring to FIG. 21, a UE receives configuration information related to channel state information (CSI) from a base station (S2101).

The configuration information related to the CSI may include at least one of CSI-IM (interference management) resource configuration information, CSI measurement configuration information, CSI resource configuration information, and CSI report configuration information.

In addition, the configuration information related to the CSI (particularly, the configuration information related to the CSI report) may include information regarding the proposed method described above.

For example, the configuration information may include information regarding the length of the DD (Doppler domain) (and/or TD (time domain)) basis vector (i.e., the number of time instances for CSI calculation/derivation) (e.g., N4). In other words, the configuration information may include information regarding the time instances for CSI calculation/derivation. For example, the CSI report configuration information may include codebook configuration information, and the codebook configuration information may include information regarding the DD basis vector length (e.g., vectorLengthDD).

For example, the configuration information may include information for a threshold that the UE will use to determine channel prediction accuracy. Furthermore, the configuration information may further include information for the time instances at which the UE should report channel prediction accuracy.

A UE receives a CSI-RS from a base station on one or more (i.e., K, where K is a natural number) CSI-RS resources (S2102).

Here, the UE may receive a CSI-RS through one or more antenna ports on one or more CSI-RS resources based on the configuration information.

A UE transmits channel state information (CSI) (feedback/report) to a base station (S2103).

Here, channel state information (CSI) (feedback/reporting) may be transmitted via an uplink physical layer channel (e.g., PUCCH or PUSCH). Furthermore, the CSI may include at least one of a precoding matrix indicator (PMI), a channel quality indicator (CQI), an RI, and a signal intensity indicator (LI).

The CSI reported by the UE to the base station may be derived/generated based on the proposed method described above.

Here, the CSI may include a PMI corresponding to indices of a codebook indicating precoding matrix(s). For example, the codebook may be a codebook based on (linear combining) of SD basis vector(s), FD basis vector(s), and DD basis vector(s).

Additionally, the PMI may indicate precoding matrices for each of a plurality of time instances (or a plurality of (contiguous) slot intervals).

Here, the precoding matrices indicated by the PMI can be determined from a plurality of vectors (i.e., DD basis vectors). In addition, the precoding matrices indicated by the PMI can be determined from L vectors (i.e., SD basis vectors) + $M_\upsilon$ vectors (i.e., FD basis vectors, layer l=1,...,$\upsilon$) + Q vectors (i.e., DD basis vectors). In other words, the precoding matrix can be determined (via linear combination) from the SD basis vector, the FD basis vector, and the DD basis vectors.

For example, the PMI can indicate precoding matrices for each of the remaining time instances, excluding one or more time instances, among the plurality of time instances configured by the base station.

As described above, the precoding matrices indicated by the PMI can be determined from a plurality of vectors. Here, for example, i) each of the plurality of vectors (e.g., DD basis vectors) may have one or more elements corresponding to one or more time instances considered as 0, among the plurality of elements corresponding to the plurality of time instances (i.e., multiple time instances configured by the base station). Alternativley, ii) each of the plurality of vectors (e.g., DD basis vectors) may be generated by removing one or more elements among the plurality of elements (i.e., multiple elements corresponding to multiple time instances configued by the base station) (e.g., reducing the length of the DD basis vector). For example, it is assumed that the base station configures the DD (Doppler domain) (and/or TD (time domain)) basis vector length (i.e., the number of time instances for CSI calculation/derivation) to 4 (e.g., $N_4$). In this case, when the UE determines that the first and third elements (i.e., the first and third time instances) are excluded for PMI calculation/derivation, in the case i), the UE may generate a precoding matrix based on the vector $[0 \, x \, 0 \, x]^T$ (where x denotes the corresponding element value), or in the case ii), the UE may generate a precoding matrix based on the vector $[x \, x]^T$ (where x denotes the corresponding element value, and the first and third elements are excluded).

Additionally, the CSI may include information for one or more elements. In other words, it may include information for one or more elements excluded from the generation of the precoding matrix among the plurality of elements configured by the base station. For example, the information for the one or more elements may correspond to a bitmap indicating the one or more elements (i.e., each bit of the bitmap corresponds one-to-one to each element) or a minimum value of the one or more elements (i.e., all elements greater than or equal to the minimum value in ascending order of the indices of the plurality of elements are excluded).

Additionally, one or more channel quality indicators (CQIs) for the plurality of time instances may be calculated for the remaining time instances, excluding the one or more time instances, among the plurality of time instances.

Additionally, one or more time instances may be excluded from the plurality of time instances based on the channel prediction accuracy being lower than a threshold predetermined in advance or configured by the base station. In other words, the UE may exclude time instances with channel prediction accuracy lower than the threshold configured by the base station.

Additionally, the CSI may include information for the channel prediction accuracy (e.g., information for the value or level of accuracy) for the one or more time instances or information for a difference from the threshold.

Additionally, the CSI may include information for a difference from the threshold for one or more time instances configured by the base station or selected by the UE. In other words, apart from the time instances excluded from the generation of precoding matrices, the CSI may include information for a difference from the threshold for one or more time instances configured by the base station or selected by the UE.

In addition, based on one or more elements of the plurality of vectors that determine the precoding matrices indicated by the PMI being considered as 0 or one or more elements being removed, the number of the plurality of vectors may be determined to be smaller than when determining the precoding matrices for each of the plurality of time instances.

FIG. 22 is a diagram illustrating an operation of a base station for a method for transmitting and receiving channel state information according to an embodiment of the present disclosure.

FIG. 22 illustrates an operation of a base station based on the methods proposed above. The example of FIG. 22 is provided for convenience of explanation and does not limit the scope of the present disclosure. Some step(s) illustrated in FIG. 22 may be omitted depending on circumstances and/or settings. In addition, the base station in FIG. 22 is only an example and may be implemented as a device illustrated in FIG. 23 below. For example, the processor (102/202) of FIG. 23 may control the transceiver (106/206) to transmit and receive channels/signals/data/information, etc., and may also control the processor (102/202) of FIG. 23 to store the channels/signals/data/information to be transmitted or received in the memory (104/204).

Referring to FIG. 22, a base station transmits configuration information related to channel state information (CSI) to a UE (S2201).

The configuration information related to the CSI may include at least one of CSI-IM (interference management) resource configuration information, CSI measurement configuration information, CSI resource configuration information, and CSI report configuration information.

In addition, the configuration information related to the CSI (particularly, the configuration information related to the CSI report) may include information regarding the proposed method described above.

For example, the configuration information may include information regarding the length of the DD (Doppler domain) (and/or TD (time domain)) basis vector (i.e., the number of time instances for CSI calculation/derivation) (e.g., N4). In other words, the configuration information may include information regarding the time instances for CSI calculation/derivation. For example, the CSI report configuration information may include codebook configuration information, and the codebook configuration information may include information regarding the DD basis vector length (e.g., vectorLengthDD) .

For example, the configuration information may include information for a threshold that the UE will use to determine channel prediction accuracy. Furthermore, the configuration information may further include information for the time instances at which the UE should report channel prediction accuracy.

A base station transmits a CSI-RS to a UE on one or more (i.e., K, where K is a natural number) CSI-RS resources (S2202).

Here, the UE may receive a CSI-RS through one or more antenna ports on one or more CSI-RS resources based on the configuration information.

A base station receives channel state information (CSI) (feedback/report) from a UE (S2203).

Here, channel state information (CSI) (feedback/reporting) may be transmitted via an uplink physical layer channel (e.g., PUCCH or PUSCH). Furthermore, the CSI may include at least one of a precoding matrix indicator (PMI), a channel quality indicator (CQI), an RI, and a signal intensity indicator (LI).

The CSI received from the UE can be derived/generated based on the proposed method described above.

Here, the CSI may include a PMI corresponding to indices of a codebook indicating precoding matrix(s). For example, the codebook may be a codebook based on (linear combining) of SD basis vector(s), FD basis vector(s), and DD basis vector(s).

Additionally, the PMI may indicate precoding matrices for each of a plurality of time instances (or a plurality of (contiguous) slot intervals).

Here, the precoding matrices indicated by the PMI can be determined from a plurality of vectors (i.e., DD basis vectors). In addition, the precoding matrices indicated by the PMI can be determined from L vectors (i.e., SD basis vectors) + $M_\upsilon$ vectors (i.e., FD basis vectors, layer l=1,...,$\upsilon$) + Q vectors (i.e., DD basis vectors). In other words, the precoding matrix can be determined (via linear combination) from the SD basis vector, the FD basis vector, and the DD basis vectors.

For example, the PMI can indicate precoding matrices for each of the remaining time instances, excluding one or more time instances, among the plurality of time instances configured by the base station.

As described above, the precoding matrices indicated by the PMI can be determined from a plurality of vectors. Here, for example, i) each of the plurality of vectors (e.g., DD basis vectors) may have one or more elements corresponding to one or more time instances considered as 0, among the plurality of elements corresponding to the plurality of time instances (i.e., multiple time instances configured by the base station). Alternativley, ii) each of the plurality of vectors (e.g., DD basis vectors) may be generated by removing one or more elements among the plurality of elements (i.e., multiple elements corresponding to multiple time instances configued by the base station) (e.g., reducing the length of the DD basis vector). For example, it is assumed that the base station configures the DD (Doppler domain) (and/or TD (time domain)) basis vector length (i.e., the number of time instances for CSI calculation/derivation) to 4 (e.g., $N_4$). In this case, when the UE determines that the first and third elements (i.e., the first and third time instances) are excluded for PMI calculation/derivation, in the case i), the UE may generate a precoding matrix based on the vector $[0\ x\ 0\ x]^T$ (where x denotes the corresponding element value), or in the case ii), the UE may generate a precoding matrix based on the vector $[x\ x]^T$ (where x denotes the corresponding element value, and the first and third elements are excluded).

Additionally, the CSI may include information for one or more elements. In other words, it may include information for one or more elements excluded from the generation of the precoding matrix among the plurality of elements configured by the base station. For example, the information for the one or more elements may correspond to a bitmap indicating the one or more elements (i.e., each bit of the bitmap corresponds one-to-one to each element) or a minimum value of the one or more elements (i.e., all elements greater than or equal to the minimum value in ascending order of the indices of the plurality of elements are excluded).

Additionally, one or more channel quality indicators (CQIs) for the plurality of time instances may be calculated for the remaining time instances, excluding the one or more time instances, among the plurality of time instances.

Additionally, one or more time instances may be excluded from the plurality of time instances based on the channel prediction accuracy being lower than a threshold predetermined in advance or configured by the base station. In other words, the UE may exclude time instances with channel prediction accuracy lower than the threshold configured by the base station.

Additionally, the CSI may include information for the channel prediction accuracy (e.g., information for the value or level of accuracy) for the one or more time instances or information for a difference from the threshold.

Additionally, the CSI may include information for a difference from the threshold for one or more time instances configured by the base station or selected by the UE. In other words, apart from the time instances excluded from the generation of precoding matrices, the CSI may include information for a difference from the threshold for one or more time instances configured by the base station or selected by the UE.

In addition, based on one or more elements of the plurality of vectors that determine the precoding matrices indicated by the PMI being considered as 0 or one or more elements being removed, the number of the plurality of vectors may be determined to be smaller than when determining the precoding matrices for each of the plurality of time instances.

General Device to which the Present Disclosure may be applied

FIG. 23 is a diagram which illustrates a block diagram of a wireless communication device according to an embodiment of the present disclosure.

In reference to FIG. 23, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method performed by a user equipment (UE) in a wireless communication system, the method comprising:

   receiving configuration information related to channel state information (CSI) from a base station, wherein the configuration information includes information related to a plurality of time instances;
   receiving, from the base station, a CSI-reference signal (CSI-RS) on K (K being an integer greater than 0) CSI-RS resources; and
   transmitting the CSI to the base station, wherein the CSI includes a precoding matrix indicator (PMI) corresponding to codebook indices,
   wherein the PMI indicates precoding matrices for each of remaining time instances, excluding one or more time instances, among the plurality of time instances.

2. The method of claim 1, wherein the precoding matrices indicated by the PMI are determined from a plurality of vectors, wherein i) each of the plurality of vectors is generated by considering one or more elements corresponding to one or more time instances as 0 among a plurality of elements corresponding to the plurality of time instances, or ii) each of the plurality of vectors is generated by removing one or more elements from the plurality of elements.

3. The method of claim 2, wherein the CSI includes information for the removed one or more elements.

4. The method of claim 2, wherein information for the one or more elements corresponds to a bitmap indicating the one or more elements or corresponds to a minimum value of the one or more elements.

5. The method of claim 1, wherein one or more channel quality indicators (CQIs) for the plurality of time instances are calculated for remaining time instances, excluding the one or more time instances, among the plurality of time instances.

6. The method of claim 1, wherein the one or more time instances are excluded from the plurality of time instances based on a channel prediction accuracy lower than a threshold determined in advance or configured by the base station.

7. The method of claim 6, wherein the CSI includes information for the channel prediction accuracy for the one or more time instances or information for a difference from the threshold.

8. The method of claim 6, wherein the CSI includes information for a difference from the threshold for one or more time instances configured by the base station or selected by the UE.

9. The method of claim 2, wherein, based on the one or more elements being considered 0 or removed, a number of the plurality of vectors is determined to be smaller than when determining precoding matrices for each of the plurality of time instances.

10. A user equipment (UE) operating in a wireless communication system, the UE comprising:

   at least one transceiver for transmitting and receiving a wireless signal; and
   at least one processor for controlling the at least one transceiver,
   wherein the at least one processor configured to:

      receive configuration information related to channel state information (CSI) from a base station, wherein the configuration information includes information related to a plurality of time instances;
      receive, from the base station, a CSI-reference signal (CSI-RS) on K (K being an integer greater than 0) CSI-RS resources; and
      transmit the CSI to the base station, wherein the CSI includes a precoding matrix indicator (PMI) corresponding to codebook indices,
      wherein the PMI indicates precoding matrices for each of remaining time instances, excluding one or more time instances, among the plurality of time instances.

11. At least one non-transitory computer-readable medium storing at least one instruction, wherein the at least one instruction executable by at least one processor controls a user equipment (UE) to:

   receive configuration information related to channel state information (CSI) from a base station, wherein the configuration information includes information related to a plurality of time instances;
   receive, from the base station, a CSI-reference signal (CSI-RS) on K (K being an integer greater than 0) CSI-RS resources; and
   transmit the CSI to the base station, wherein the CSI includes a precoding matrix indicator (PMI) corresponding to codebook indices,
   wherein the PMI indicates precoding matrices for each of remaining time instances, excluding one or more time instances, among the plurality of time instances.

12. A processing apparatus configured to control a user equipment (UE) in a wireless communication system, the processing apparatus comprising:

   at least one processor; and
   at least one computer memory operably connected to the at least one processor and storing instructions that, based on being executed by the at least one processor, perform operations comprising:

      receiving configuration information related to channel state information (CSI) from a base station, wherein the configuration information includes information related to a plurality of time instances;
      receiving, from the base station, a CSI-reference signal (CSI-RS) on K (K being an integer greater than 0) CSI-RS resources; and
      transmitting the CSI to the base station, wherein the CSI includes a precoding matrix indicator (PMI) corresponding to codebook indices,
      wherein the PMI indicates precoding matrices for each of remaining time instances, excluding one or more time instances, among the plurality of time instances.

13. A method performed by a base station in a wireless communication system, the method comprising:

   transmitting configuration information related to channel state information (CSI) to a user equipment (UE), wherein the configuration information includes information related to a plurality of time instances;

transmitting, to the UE, a CSI-reference signal (CSI-RS) on K (K being an integer greater than 0) CSI-RS resources; and

receiving the CSI from the UE, wherein the CSI includes a precoding matrix indicator (PMI) corresponding to codebook indices,

wherein the PMI indicates precoding matrices for each of remaining time instances, excluding one or more time instances, among the plurality of time instances.

14. A base station operating in a wireless communication system, the base station comprising:

at least one transceiver for transmitting and receiving a wireless signal; and

at least one processor for controlling the at least one transceiver,

wherein the at least one processor configured to:

transmit configuration information related to channel state information (CSI) to a user equipment (UE), wherein the configuration information includes information related to a plurality of time instances;

transmit, to the UE, a CSI-reference signal (CSI-RS) on K (K being an integer greater than 0) CSI-RS resources; and

receive the CSI from the UE, wherein the CSI includes a precoding matrix indicator (PMI) corresponding to codebook indices,

wherein the PMI indicates precoding matrices for each of remaining time instances, excluding one or more time instances, among the plurality of time instances.

# FIG.1

AMF/UPF

AMF/UPF

NGC

NG-C/U

NG-C/U

NG-C/U

NG-C/U

gNB

Xn

gNB

NG-RAN

Xn

Xn

gNB

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$        $l = 14 \cdot 2^{\mu} - 1$

# FIG.4

# FIG.5

FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT USING PUSCH AND PUCCH

EP 4 686 118 A2

## FIG.7

Artificial Intelligence

Machine learning

Deep Learning

## FIG.8

◯ Input layer    ◯ Hidden layer    ◯ Output layer

## FIG.9

FIG.10

Input image
36×36

4 feature maps

28×28

14×14

Convolution
(kernel:9×9×1)

Max pooling

FIG.11

W

V

$x_1$

h1

$x'_1$

$x_2$

h2

$x'_2$

$x_3$

$x'_3$

Encoder

Decoder

Loss function: $\underset{W,V}{\mathrm{argmin}} \| x - g(f(x)) \|^2$,

where $h = f(x) = Wx, x' = g(h) = Vh$

## FIG.12

## FIG.13

End device partition
(partial AI operation/model)

Network partition
(partial AI operation/model)

Actor

Intermediate
data

Inference
outputs

End device

Network AI end device

FIG.14

UE          RAN node 1          RAN node 2          Network node

1. Training data

1. Training data

2. Model training

3. Model deployment/update

4. Inference data

4. Inference data

5. Model inference

6. Model performance feedback

7. Action

8. Feedback

8. Feedback

FIG.15

UE          RAN node 1          RAN node 2

1. Training data

1. Training data

2. Model training

3. Inference data

3. Inference data

4. Model inference

5. Action

6. Feedback

FIG.16

UE            RAN node

1. Training data

2. Model training

3. Model deployment/update

4. Inference data

5. Model inference

6. Model performance feedback

7. Action

8. Feedback

FIG.17

CSI report

Periodic CMR
(or IMR)

CSI reference
resource

Time
(slot)

$PMI_{ref\_rsc}$   $PMI_{ref\_rsc+\tau}$   $PMI_{ref\_rsc+2\tau}$

Compression in enhanced Type II codebook

FIG.18

CSI report

Periodic CMR
(or IMR)

CSI reference
resource

Time
(slot)

$PMI_{ref\_rsc-2\tau}$      $PMI_{ref\_rsc-\tau}$      $PMI_{ref\_rsc}$

Compression in enhanced Type II codebook

FIG.19

FIG.19

Codebook

$\begin{bmatrix} Wf \\ W1 \end{bmatrix}$  $\begin{bmatrix} Wf \\ W1 \end{bmatrix}$  $\begin{bmatrix} Wf \\ W1 \end{bmatrix}$  $\begin{bmatrix} Wf \\ W1 \end{bmatrix}$  } Common SD/FD basis for all time duration

Q(=2) DD DFT basis

$\begin{bmatrix} e^{j\theta 11} & e^{j\theta 12} & e^{j\theta 13} & e^{j\theta 14} \end{bmatrix}$ B1
$\begin{bmatrix} e^{j\theta 21} & e^{j\theta 22} & e^{j\theta 23} & e^{j\theta 24} \end{bmatrix}$ B2

Q NZC bitmaps for SD/FD basis during reporting window

PMIs

$PMI_{n+\delta}$  $PMI_{n+d+\delta}$  $PMI_{n+2d+\delta}$  $PMI_{n+3d+\delta}$

slot

n    n+1    n+2    n+3

$n-n_{CSI\_ref}$

(CSI reference resource slot)  (CSI reporting slot for CQI and $PMI_n \sim PMI_{n+3}$ )

# FIG.20

Network                                                    UE

Configuration information ⟋⟍ S2001

CSI-RS ⟋⟍ S2002

Channel state information ⟋⟍ S2003

# FIG.21

| Receive configuration information related to CSI | ⟋ S2101 |

↓

| Receive CSI-RS on K CSI-RS resources | ⟋ S2102 |

↓

| Transmit CSI | ⟋ S2103 |

# FIG.22

| Transmit configuration information related to CSI | ⟋ S2201 |

↓

| Transmit CSI-RS on K CSI-RS resources | ⟋ S2202 |

↓

| Receive CSI | ⟋ S2203 |

EP 4 686 118 A2

# FIG.23